(19) Europäisches Patentamt
European Patent Office
Office européen des brevets

(11) Publication number: 0 354 047 A2

(12) **EUROPEAN PATENT APPLICATION**

(21) Application number: 89307924.4

(22) Date of filing: 03.08.89

(51) Int. Cl.[5]: A 01 N 43/70
//(A01N43/70,43:40)

(30) Priority: 05.08.88 GB 8818649
16.09.88 GB 8821746

(43) Date of publication of application:
07.02.90 Bulletin 90/06

(84) Designated Contracting States:
AT BE CH DE ES FR GB GR IT LI LU NL SE

(71) Applicant: MAY & BAKER LIMITED
Dagenham Essex RM10 7XS (GB)

(72) Inventor: Hewett, Richard Henry
c/o May & Baker Limited
Dagenham Essex, RM10 7XS (GB)

Luscombe, Brian Malcolm
c/o May & Baker Limited
Dagenham Essex, RM10 7XS (GB)

(74) Representative: Bentham, Stephen et al
J.A. Kemp & Co. 14 South Square Gray's Inn
London WC1R 5EU (GB)

(54) **Herbicidal method using atrazine.**

(57) A method of controlling the growth of weeds at a maize crop locus using (a) atrazine and (b) a 3-benzoylpiperidine-2,4-dione derivative and herbicidal compositions containing (a) and (b).

EP 0 354 047 A2

## Description

# HERBICIDAL METHOD USING ATRAZINE

The present invention relates to a method for controlling the growth of weeds using certain 3-benzoylpiperidine-2,4-dione derivatives and atrazine, and to compositions for use in the method.

The present invention relates to a method for controlling the growth of weeds in maize crops and to new herbicidal compositions comprising 3-benzoylpiperidine-2,4-dione derivatives of general formula I depicted hereinafter wherein either $R^1$ and $R^2$ both represent hydrogen atoms or both represent methyl groups, $R^3$ represents the nitro group and $R^4$ represents the chlorine atom or the trifluoromethyl group, or $R^3$ represents the chlorine atom or the nitro group and $R^4$ represents the methylsulphonyl group; and salts thereof with agriculturally acceptable bases [which are described amongst others in the specification of European Patent Publication No. 278742 as pre- and/or post emergence herbicides].

The compounds of general formula I are:

1. 3-(4-chloro-2-nitrobenzoyl)-6,6-dimethylpiperidine-2,4-dione
6. 3-(4-chloro-2-nitrobenzoyl)piperidine-2,4-dione
74. 3-(2-nitro-4-trifluoromethylbenzoyl)piperidine-2,4-dione
99. 3-(2-nitro-4-trifluoromethylbenzoyl)-6,6-dimethylpiperidine-2,4-dione
103. 3-(4-methylsulphonyl-2-nitrobenzoyl)-6,6-dimethylpiperidine-2,4-dione
110. 3-(4-methylsulphonyl-2-nitrobenzoyl)piperidine-2,4-dione
126. 3-(2-chloro-4-methylsulphonylbenzoyl)piperidine-2,4-dione
135. 3-(2-chloro-4-methylsulphonylbenzoyl)-6,6-dimethylpiperidine-2,4-dione

The numbers are assigned to the above compounds for identification and reference hereinafter, and correspond to the numbers assigned to those compounds in European Patent Publication No. 278742.

Atrazine [2-chloro-4-ethylamino-6-isopropylamino-1,3,5-triazine] is used on a large scale for pre- and/or early post-emergence weed control in maize. Although giving control of a wide range of broad-leaf weeds some important species for example Amaranthus retroflexus, Chenopodium album and Solanum nigrum are developing resistance. Grass weeds are less susceptible, particularly to post-emergence application, and higher application rates are required. The residual activity of atrazine is such that use of these higher rates, in particular, can affect following crops.

As a result of research and experimentation it has now been discovered that the use of certain 3-benzoylpiperidine-2,4-dione derivatives in combination with atrazine adds to its capabilities of controlling broad-leaf weeds, particularly those developing atrazine-resistance, and especially grass weeds. As a result, application rates of atrazine can be reduced, thereby overcoming problems with residual activity.

In addition to this it has been found that the combined herbicidal activity of combinations of the 3-benzoyl piperidine-2,4-dione derivatives with atrazine against certain species is greater than expected when applied post-emergence (e.g. as a post-emergence spray) i.e. the herbicidal activity of combinations of the 3-benzoyl piperidine-2,4-dione derivatives with atrazine showed an unexpected degree of synergism (as defined either by P.M.L. Tammes, Netherlands Journal of Plant Pathology 70 (1964), pp 73-80 in a paper entitled "Isoboles, a graphic representation of synergism in pesticides" or by L.E. Limpel et al, Proceedings of the North East Weed Control Conference, 16 (1962), pp 48-53 in a paper entitled "Weed control by dimethyl tetrachloroterephthalate alone and in certain mixtures").

The remarkable synergistic effect of the mixture for example when applied post-emergence gives improved reliability of weed control in maize cultures and allows for a further reduction in the amount of active ingredient employed.

Accordingly the present invention provides a method for the control of the growth of weeds at a maize crop locus which comprises applying to the locus a) atrazine and b) a 3-benzoyl piperidine-2,4-dione derivative of general formula I as hereinbefore defined or a salt thereof with an agriculturally acceptable base. Preferably the application rates of a) and b) are from 8 to 1500 preferably from 250 to 1500 (more preferably from 500 to 1000) g/ha and from 0.5 to 500 preferably from 25 to 500 (more preferably 50 to 250) acid equivalent (a.e.) g/ha respectively in proportions of preferably 60:1 to 1:2 and more preferably 20:1 to 2:1 wt/wt of a) to acid equivalent b).

The method of the invention may be used to control a broad spectrum of weed species in a maize crop by pre- and/or post-emergence application without significant permanent damage to the crop. The combined use described above provides both foliar and residual activity.

By the term 'pre-emergence application' is meant application to the soil in which the weed seeds or seedlings are present before emergence of the weeds above the surface of the soil. By the term 'post-emergence application' is meant application to the aerial or exposed portions of the weeds which have emerged above the surface of the soil. It will be appreciated that application according to the method may be from pre- to post-weed emergence pre-crop emergence to post-weed post-crop emergence. By the term 'foliar activity' is meant herbicidal activity produced by application to the aerial or exposed portions of the weeds which have emerged above the surface of the soil. By the term 'residual activity' is meant herbicidal activity produced by application to the soil in which weed seeds or seedlings are present before emergence of the weeds above the surface of the soil, whereby seedlings present at the time of application or which germinate subsequent to application from seeds present in the soil, are controlled.

Weeds that may be be controlled by the method include:- from broad-leaf weeds, Abutilon theophrasti Amaranthus retroflexus, Ambrosia trifida, Bidens pilosa, Brassica kaber, Chenopodium album, Datura stramonium, Ipomoea purpurea, Kochia scoparia, Polygonum spp (e.g. P. convolvulus, P.pennsylvanicum, P.persicaria), Sesbania exaltata, Sida spinosa, Solanum nigrum, and Xanthium pennsylvanicum, and from grass weeds, Brachiaria plantaginea, Digitaria spp (e.g. Digitaria horizontalis, Digitaria sanguinalis, Echinochloa crus-galli, and Eleusine indica, and from sedges, Cyperus spp (e.g. C. esculentus and C.rotundus).

In accordance with usual practice, a tank mix may be prepared prior to use by combining separate formulations of the individual herbicidal components, or separate formulations may be applied in a time-separated manner.

The following experiments illustrate the present invention by demonstrating the synergistic activity of atrazine and 3-benzoyl-piperidine-2,4-dione derivatives.

EXPERIMENT 1

Field experiment showing biological synergism between atrazine and 3-(4-chloro-2-nitrobenzoyl)-6,6-dimethylpiperidine-2,4-dione [Compound 1].

Duplicate $12m^2$ plots were sprayed post-emergence with 250g or 500g/ha Compound 1 (in a composition according to Example 1 as described hereinafter) or 1500g/ha atrazine (in a commercial aqueous suspension concentrate formulation containing 500g/l w/v atrazine or a combination (as a tank mix) of the two herbicides in a volume of 300 litres/ha. The following control figures were recorded on the grass weeds Brachiaria plantaginea (BRAPL), Digitaria horizontalis (DIGHO) and Eleusine indica (ELEIN) 29 days after application.

| Treatment | % control observed | | |
|---|---|---|---|
| | BRAPL | DIGHO | ELEIN |
| Atrazine 1500g/ha | 10 | 0 | 0 |
| Compound 1 @ 250g/ha | 60 | 70 | 70 |
| Atrazine 1500g/ha + Compound 1 @ 250g/ha | 90 | 85 | 85 |
| Compound 1 @ 500g/ha | 80 | 80 | 80 |
| Atrazine 1500g/ha + Compound 1 @ 500g/ha | 93 | 93 | 93 |

The expected value (E) for the treatments employing the mixtures of atrazine and Compound 1 were calculated from the results obtained with the components applied separately (X and Y) using the formula of L.E. Limpel et al (1962)

$$E = X + Y - \frac{XY}{100}$$

where X and Y are percentage control of growth.

The following expected values were calculated:-

| Treatment | Expected % control | | |
|---|---|---|---|
| | BRAPL | DIGHO | ELEIN |
| Atrazine 1500g/ha + Compound 1 @ 250g/ha | 64 | 70 | 70 |
| Atrazine 1500g/ha + Compound 1 @ 500g/ha | 82 | 80 | 80 |

As these expected values are less than the values actually observed there is a clear demonstration of synergism.

EXPERIMENT 2

Glasshouse experiment showing biological synergism between atrazine and 3-(2-nitro-4-trifluoromethylbenzoyl)piperidine-2,4-dione [Compound 74]

A wide range of doses of atrazine i.e. 125,250,500 and 1000g/ha (in a commercial aqueous suspension concentrate formulation containing 500g/l w/v atrazine and of Compound 74 i.e. 16,31,63,125 and 250g/ha (in a composition according to Example 2 as described hereinafter) were applied at a spray volume of 290 litres/ha to triplicate 7.5cm square plastic plant pots of loam soil planted with 4 seedlings of Eleusine indica at the 4-leaf growth stage. Agricultural surfactant - nonylphenol ethylene oxide condensate containing 9 moles ethylene oxide (in a commercial composition) was added to all spray dilutions to give 0.2% v/v concentration. After spraying the pots were arranged in randomised blocks in a glasshouse, watered as necessary, and assessed

after 19 days for percentage phytotoxicity (reduction in green area compared with unsprayed plants) (0 = no effect; 100 = complete destruction). The mean results obtained for each treatment were as follows:-

| Application rate of atrazine g/ha | Application rate of Compound 74 g/ha | | | | | |
|---|---|---|---|---|---|---|
| | 0 | 16 | 31 | 63 | 125 | 250 |
| 0 | | 13 | 12 | 40 | 50 | 77 |
| 125 | 2 | 37 | 37 | 57 | 70 | 77 |
| 250 | 13 | 40 | 47 | 60 | 80 | 92 |
| 500 | 17 | 60 | 80 | 85 | 98 | 100 |
| 1000 | 43 | 70 | 77 | 70 | 98 | 100 |

From these results the $ED_{50}$ values (effective dose giving 50% phytotoxicity) in grams per hectare of Compound 74 were calculated for Compound 74 alone and with increasing rates of atrazine, and for atrazine alone. The $ED_{50}$ values were as follows:-

| | $ED_{50}$(g/ha) |
|---|---|
| Compound 74 alone | 101 |
| Compound 74 with 125g/ha atrazine | 45 |
| Compound 74 with 250g/ha atrazine | 32 |
| Compound 74 with 500g/ha atrazine | 13 |
| Compound 74 with 1000g/ha atrazine | 16 |
| Atrazine alone | 1193 |

The results were then used to plot an isobole with a "two-sided effect" according to the methods of P.M.L. Tammes op. cit. The isobole produced, shown hereinafter in Figure 1 was clearly a type III curve (Tammes, op.cit., page 75), characteristic of synergism.

EXPERIMENT 3

Glasshouse experiments showing biological synergism between atrazine and 3-benzoylpiperidine-2,4-dione derivatives on weed species when applied post-emergence.

A series of experiments was carried out to determine the nature of the biological interaction between atrazine and five compounds of general formula I on a range of weed species. The 3-benzoylpiperidine-2,4-dione derivatives were compounds 1, 74, 99, 110 and 126. A wide range of dose rates of atrazine (in a commercial suspension concentrate formulation containing 500g/l w/v atrazine) and of the 3-benzoylpiperidine-2,4-dione derivatives (in compositions according to Examples 2-6 as described hereinafter) were applied in a spray volume of 290litres/ha to six replicate 7.5cm square plastic plant pots of loam soil planted with seedlings of each of the target weed species. The dose rates of each component were selected according to the sensitivity of the weed species and are shown in the tables of results. The growth stages of the plants at spraying are also presented with the results. Agricultural surfactant (nonyl phenol ethylene oxide condensate containing 9 moles ethylene oxide marketed as 'Agral') was added to all spray dilutions to give 0.2% v/v concentration.

After spraying the pots were arranged in randomised blooks in a glasshouse and watered as necessary. After 19 days the fresh weight of vegetation in each pot was determined. The mean fresh weights were used to calculate the percentage inhibition of each species thus

$$100 \times \frac{\text{Mean wt in untreated pots - Mean wt in treated pots}}{\text{Mean weight in untreated pots.}}$$

Where possible the expected values E for treatments employing mixtures of piperidinedione and atrazine were calculated from the results obtained with the components applied alone (X and Y) using the formula of Limpel et al (1962).

$$E = X + Y - \frac{XY}{100}$$

where E, X and Y are percentage inhibition of growth.

In addition, the $ED_{50}$ or $ED_{90}$ values (the application rates giving 50% or 90% inhibition of growth, respectively) were calculated from the results for the piperidinedione alone and with increasing rates of atrazine. The ED values were then used to plot an isobole for each species according to the method of P.M.L. Tammes op cit. The results of percentage inhibition of growth, the ED values calculated from them and the calculated expected values are given in Tables 1-7.

The equation of Limpel could be applied to the data on 233 occasions. Of these, expected values were less than the values actually observed on 218 occasions (5 more than and 10 equal to). This overwhelmingly skewed distribution of responses is a clear demonstration of synergism.

The isoboles produced shown hereinafter in Figures 2 - 16 are all clearly either type III curves for a 'two-sided effect' (Tammes op cit page 75) or type II curves for a 'one-sided effect' (Tammes op cit page 74) both characteristic of synergism, thereby confirming the interpretation of the Limpel equation.

## EXPERIMENT 4

Glasshouse experiments showing the biological interaction between atrazine and Compound 99 on weed species when applied pre-emergence.

An experiment was carried out to determine the biological interaction between atrazine and Compound 99 on *Brassica kaber* and *Sida spinosa*. A wide range of dose rates of atrazine i.e. 16, 31, 63, 125, 250 and 500g/ha (in a commercial suspension concentrate formulation containing 500g/l w/v atrazine) and of Compound 99 i.e. 2, 4, 8, 16, 31, 63, 125 and 250g/ha (in a composition according to Example 4 as described hereinafter) were applied pre-emergence in a spray volume of 290litres/ha to six replicate 7cm square plastic plant pots of loam soil containing seeds of *Brassica kaber* or *Sida spinosa*.

After spraying the pots were arranged in randomised blocks in a glasshouse and watered as necessary. After 27 days the fresh weight of vegetation in each pot was determined. The mean fresh weights were used to calculate the percentage inhibition of each species thus

$$100 \times \frac{\text{Mean wt in untreated pots - Mean wt in treated pots}}{\text{Mean weight in untreated pots}}$$

Where possible the expected values E for treatments employing mixtures of Compound 99 and atrazine were calculated from the results obtained with the components applied alone (X and Y) using the formula of Limpel et al (1962).

$$E = X + Y - \frac{XY}{100}$$

where E, X and Y are percentage inhibition of growth.

In addition the ED90 values (the application rate giving 90% inhibition of growth) were calculated from the results for Compound 99 alone and with increasing rates of atrazine. The ED90 values were then used to plot an isobole for each species according to the method of P.M.L. Tammes op cit. The results of percentage inhibition of growth, the ED values calculated from them and the calculated expected values are given in Table 8.

The equation of Limpel could be applied to the data on 42 occasions. Of these, expected values were less than the values actually observed on 31 occasions (9 more than and 2 equal to). This overwhelmingly skewed distribution of responses is a clear demonstration of synergism.

The isoboles produced shown hereinafter in Figures 17 and 18 are both clearly type III curves (Tammes op cit page 75) characteristic of synergism, thereby confirming the interpretation of the Limpel equation.

## EXPERIMENT 5

Glasshouse experiment showing the biological interaction between atrazine and Compound 74 on maize var.Irla.

An experiment was carried out to determine the biological interaction between atrazine and Compound 74 on maize. A wide range of dose rates of atrazine i.e. 250, 500, 1000 and 2000 g/ha (in a commercial suspension concentrate formulation containing 500g/l w/v atrazine) and of Compound 74 i.e. 31, 63, 125, 250, 1000 and 2000 g/ha (in a composition according to Example 2 as described hereinafter) were applied in a spray volume of 290litres/ha to four replicate 10cm square plastic plant pots of loam soil containing one maize plant, at the 3 leaf growth stage. Agricultural surfactant ('Agral') was added to the spray dilutions to give 0.2%v/v concentration.

After spraying the pots were arranged in randomised blocks in a glasshouse and watered as necessary. After 12 days the plants were assessed for percentage phytotoxicity (reduction in green area compared with

unsprayed plants) (0 = no effect 100 = complete destruction).

Where possible the expected values E for treatments employing mixtures of Compound 74 and atrazine were calculated from the results obtained with the components applied alone (X and Y) using the formula of Limpel et al (1962).

$$E = X + Y - \frac{XY}{100}$$

where E, X and Y are percentage phytotoxicity.

In addition the $ED_{20}$ values (the application rates giving 20% phytotoxicity) were calculated from the results for Compound 74 alone and with increasing rates of atrazine. The ED values were then used to plot an isobole according to the method of P.M.L. Tammes op cit. The results of percentage phytotoxicity, the $ED_{20}$ values calculated from them and the calculated expected value are given in Table 9.

Although of the 20 occasions on which the equation of Limpel could be applied expected values were more than the values actually observed on 14 occasions and less than on 4 occasions the differences were very small (4% or less on 13 occasions). On a further 2 occasions the expected and observed values were equal. It can be concluded that the interaction between Compound 74 and atrazine on maize is additive. As atrazine produced no crop phytotoxicity the mixture would not adversely affect the tolerance of maize.

The isoboles produced shown hereinafter in Figure 19 indicate a response similar to a type I curve (Tammes op cit page 74) characteristic of an independent (additive) effect thereby confirming the interpretation of the Limpel equation.

Table 1

| Rate (g/ha) Compound 1 | Atrazine | % inhibition of growth Amaranthus retroflexus 2 leaves | |
|---|---|---|---|
| 2 | 0 | 25 | |
| 4 | 0 | 52 | |
| 8 | 0 | 73 | |
| 16 | 0 | 87 | |
| 31 | 0 | 95 | |
| 63 | 0 | 96 | |
| | | $ED_{90}$(g/ha) 22.58 | |
| 0 | 8 | 36 | |
| 0 | 16 | 58 | |
| 0 | 31 | 81 | |
| 0 | 63 | 88 | |
| 0 | 125 | 95 | |
| | | $ED_{90}$(g/ha) 68.57 | |
| 1 | 8 | 76 | - |
| 2 | 8 | 91 | (52) |
| 4 | 8 | 94 | (69) |
| 8 | 8 | 98 | (83) |
| 16 | 8 | 100 | (92) |
| 31 | 8 | 100 | (97) |
| | | $ED_{90}$(g/ha) 2.28 | NA |
| 0.5 | 16 | 84 | - |
| 1 | 16 | 85 | - |
| 2 | 16 | 94 | (68) |
| 4 | 16 | 99 | (80) |
| 8 | 16 | 99 | (89) |
| 16 | 16 | 99 | (95) |
| 31 | 16 | 100 | (98) |
| | | $ED_{90}$(g/ha) 1.18 | NA |
| 0.25 | 31 | 69 | - |
| 0.5 | 31 | 91 | - |
| 1 | 31 | 94 | - |
| 2 | 31 | 91 | (86) |
| 4 | 31 | 98 | (91) |
| 8 | 31 | 99 | (95) |
| | | $ED_{90}$(g/ha) 0.86 | NA |
| 0.25 | 63 | 75 | - |
| 0.5 | 63 | 94 | - |
| 1 | 63 | 97 | - |
| 2 | 63 | 100 | (91) |
| 4 | 63 | 100 | (94) |
| | | $ED_{90}$(g/ha) 0.46 | NA |

( ) Expected values by Limpel; - Not calculated; NA Not applicable.

Table 2

| Rate (g/ha) Compound 74 | Atrazine | % inhibition of growth Digitaria sanguinalis 3 leaves | | Eleusine indica 3 leaves | |
|---|---|---|---|---|---|
| 16 | 0 | | 55 | | 0 |
| 31 | 0 | | 75 | | 26 |
| 63 | 0 | | 88 | | 55 |
| 125 | 0 | | 96 | | 84 |
| 250 | 0 | | 99 | | 96 |
| 500 | 0 | | 100 | | 95 |
| | | | $ED_{90}$ (g/ha) 75.46 | | $ED_{50}$ (g/ha) 72.43 |
| 0 | 125 | | 25 | | 4 |
| 0 | 125 | | 23 | | 19 |
| 0 | 500 | | 24 | | 36 |
| 0 | 1000 | | 32 | | 66 |
| | | | $ED_{90}$ (g/ha) ∞ | | $ED_{50}$ (g/ha) 64.61 |
| 16 | 125 | 64 | (66) | 46 | (4) |
| 31 | 125 | 82 | (81) | 68 | (29) |
| 63 | 125 | 95 | (91) | 81 | (57) |
| 125 | 125 | 99 | (97) | 93 | (85) |
| 250 | 125 | 100 | (99) | 99 | (96) |
| 500 | 125 | 100 | (100) | 100 | (95) |
| | | $ED_{90}$(g/ha) 47.32 | NA | $ED_{50}$ 18.43 | NA |
| 16 | 250 | 71 | (65) | 61 | (19) |
| 31 | 250 | 86 | (81) | 69 | (40) |
| 63 | 250 | 97 | (91) | 83 | (64) |
| 125 | 250 | 98 | (97) | 92 | (87) |
| 250 | 250 | 100 | (99) | 98 | (97) |
| | | $ED_{90}$ (g/ha) 41.03 | NA | $ED_{50}$ 13.17 | NA |
| 8 | 500 | 64 | - | 61 | - |
| 16 | 500 | 77 | (66) | 66 | (36) |
| 31 | 500 | 91 | (81) | 86 | (53) |
| 63 | 500 | 97 | (91) | 93 | (71) |
| 125 | 500 | 99 | (97) | 98 | (90) |
| | | $ED_{90}$(g/ha) 29.6 | NA | $ED_{50}$ 6.81 | NA |
| 8 | 1000 | 74 | - | 86 | - |
| 16 | 1000 | 79 | (69) | 97 | (66) |
| 31 | 1000 | 96 | (83) | 98 | (75) |
| 63 | 1000 | 98 | (92) | 99 | (85) |
| 125 | 1000 | 100 | (97) | 100 | (95) |
| | | $ED_{90}$(g/ha) 22.74 | NA | $ED_{50}$(g/ha) $<8$ | NA |

( ) Expected values by Limpel; - Not calculated; NA Not applicable.

Table 3

| Rate (g/ha) Compound 74 | Atrazine | % inhibition of growth Bidens pilosa | | Sesbania exactata | | Xanthium strumarium | |
|---|---|---|---|---|---|---|---|
| | | 2 leaves | | 2 leaves | | 2 leaves | |
| 8 | 0 | | 0 | | 65 | | 55 |
| 16 | 0 | | 0 | | 73 | | 45 |
| 31 | 0 | | 0 | | 61 | | 74 |
| 163 | 0 | | 15 | | 80 | | 79 |
| 125 | 0 | | 48 | | 84 | | 86 |
| 250 | 0 | | 75 | | 79 | | 92 |
| | | | $ED_{50}$(g/ha) 141.27 | | $ED_{90}$(g/ha) 375.45 | | $ED_{90}$(g/ha) 166.99 |
| 0 | 8 | | 0 | | 21 | | 25 |
| 0 | 16 | | 0 | | 34 | | 21 |
| 0 | 31 | | 5 | | 68 | | 72 |
| 0 | 63 | | 46 | | 86 | | 59 |
| 0 | 125 | | 92 | | 96 | | 84 |
| | | | $ED_{50}$(g/ha) 63.17 | | $ED_{90}$(g/ha) 76.91 | | $ED_{90}$(g/ha) 138.01 |
| 4 | 8 | 25 | - | 59 | - | 75 | - |
| 8 | 8 | 35 | (0) | 65 | (72) | 69 | (66) |
| 16 | 8 | 29 | (0) | 91 | (79) | 84 | (59) |
| 31 | 8 | 36 | (0) | 95 | (69) | 84 | (80) |
| 63 | 8 | 34 | (15) | 98 | (84) | 89 | (84) |
| 125 | 8 | 62 | (48) | 99 | (87) | 88 | (89) |
| | | $ED_{50}$(g/ha) 62.43 | NA | $ED_{90}$ 20.84 | NA | $ED_{90}$ 90.41 | NA |
| 2 | 16 | 0 | - | 63 | - | 54 | - |
| 4 | 16 | 0 | - | 93 | - | 74 | - |
| 8 | 16 | 25 | (0) | 92 | (77) | 74 | (64) |
| 16 | 16 | 13 | (0) | 94 | (82) | 83 | (57) |
| 31 | 16 | 29 | (0) | 99 | (74) | 87 | (79) |
| 63 | 16 | 51 | (15) | 100 | (87) | 89 | (83) |
| | | $ED_{50}$(g/ha) 42.81 | NA | $ED_{90}$ 7.06 | NA | $ED_{90}$ 50.1 | NA |
| 1 | 31 | 0 | - | 82 | - | 62 | - |
| 2 | 31 | 15 | - | 94 | - | 77 | - |
| 4 | 31 | 33 | - | 95 | - | 79 | - |
| 8 | 31 | 24 | (5) | 99 | (89) | 85 | (87) |
| 16 | 31 | 45 | (5) | 100 | (91) | 90 | (85) |
| 31 | 31 | 62 | (5) | 97 | (88) | 92 | (93) |
| | | $ED_{50}$(g/ha) 14.3 | NA | $ED_{90}$ 1.74 | NA | $ED_{90}$ 17.14 | NA |
| 1 | 63 | 36 | - | 81 | - | 76 | - |
| 2 | 63 | 40 | - | 93 | - | 81 | - |
| 4 | 63 | 58 | - | 99 | - | 86 | - |
| 8 | 63 | 52 | (46) | 100 | (95) | 92 | (82) |
| 16 | 63 | 70 | (46) | 100 | (96) | 90 | (77) |
| 31 | 63 | 67 | (46) | 100 | (95) | 92 | (89) |
| | | $ED_{50}$(g/ha) 4.03 | NA | $ED_{90}$ 1.61 | NA | $ED_{90}$ 10.7 | NA |

( ) Expected values by Limpel; - Not calculated; NA Not applicable.

TABLE 4

| Rate (g/ha) Compound 74 | Atrazine | % inhibition of growth Amaranthus retroflexus 2-4 leaves | | Brassica kaber 2-3 leaves | | Solanum nigrum 1-2 leaves | |
|---|---|---|---|---|---|---|---|
| 2 | 0 | | 27 | | 19 | | 15 |
| 4 | 0 | | 47 | | 20 | | 30 |
| 8 | 0 | | 69 | | 32 | | 39 |
| 16 | 0 | | 76 | | 61 | | 60 |
| 31 | 0 | | 86 | | 72 | | 82 |
| 63 | 0 | | 90 | | 96 | | 94 |
| | | | ED90(g/ha) 46.43 | | ED50(g/ha) 10.3 | | ED90(g/ha) 41.13 |
| 0 | 8 | | 8 | | 16 | | 9 |
| 0 | 16 | | 26 | | 5 | | 47 |
| 0 | 31 | | 39 | | 19 | | 47 |
| 0 | 63 | | 56 | | 30 | | 67 |
| 0 | 125 | | 96 | | 57 | | 90 |
| | | | ED90(g/ha) 105.79 | | ED50(g/ha) 88.39 | | ED90(g/ha) 121.27 |
| 1 | 8 | 41 | - | 32 | - | 59 | - |
| 2 | 8 | 76 | (33) | 55 | (32) | 71 | (23) |
| 4 | 8 | 91 | (51) | 73 | (33) | 86 | (36) |
| 8 | 8 | 96 | (71) | 85 | (43) | 98 | (44) |
| 16 | 8 | 100 | (78) | 89 | (67) | 93 | (64) |
| 31 | 8 | 100 | (87) | 100 | (76) | 96 | (84) |
| | | ED90(g/ha) 4.48 | NA | ED50 1.96 | NA | ED90 6.5 | NA |
| 0.5 | 16 | 47 | - | 9 | - | 28 | - |
| 1 | 16 | 64 | - | 38 | - | 55 | - |
| 2 | 16 | 84 | (46) | 43 | (23) | 75 | (55) |
| 4 | 16 | 96 | (61) | 74 | (24) | 78 | (63) |
| 8 | 16 | 96 | (77) | 94 | (35) | 92 | (68) |
| 16 | 16 | 96 | (82) | 94 | (63) | 94 | (79) |
| | | ED90(g/ha) 3.79 | NA | ED50) 1.98 | NA | ED90 7.59 | NA |
| 0.25 | 31 | 29 | - | 13 | - | 24 | - |
| 0.5 | 31 | 57 | - | 33 | - | 57 | - |
| 1 | 31 | 80 | - | 55 | - | 58 | - |
| 2 | 31 | 92 | (55) | 63 | (34) | 87 | (55) |
| 4 | 31 | 100 | (68) | 89 | (35) | 91 | (63) |
| 8 | 31 | 100 | (81) | 99 | (45) | 100 | (68) |
| | | ED90(g/ha) 1.55 | NA | ED50 0.93 | NA | ED90 2.67 | NA |
| 0.25 | 63 | 58 | - | 27 | - | 55 | - |
| 0.5 | 63 | 87 | - | 49 | - | 75 | - |
| 1 | 63 | 100 | - | 82 | - | 80 | - |
| 2 | 63 | 100 | (68) | 78 | (43) | 95 | (72) |
| 4 | 63 | 100 | (77) | 82 | (44) | 92 | (77) |
| 8 | 63 | 100 | (86) | 96 | (52) | 100 | (80) |
| | | ED90(g/ha) 0.52 | NA | ED50 0.57 | NA | ED90 1.69 | NA |

( ) Expected values by Limpel; - Not calculated; NA Not applicable.

Table 5

| Rate (g/ha) Compound 99 | Atrazine | % inhibition of growth Amaranthus retroflexus 2 leaves | | Brassica kaber 2 leaves | |
|---|---|---|---|---|---|
| 2 | 0 | | 37 | | 22 |
| 4 | 0 | | 85 | | 40 |
| 8 | 0 | | 88 | | 69 |
| 16 | 0 | | 80 | | 58 |
| 31 | 0 | | 91 | | 91 |
| 63 | 0 | | 98 | | 91 |
| | | | $ED_{90}$(g/ha) 14 | | $ED_{90}$(g/ha) 31 |
| 0 | 8 | | 0 | | 0 |
| 0 | 16 | | 58 | | 21 |
| 0 | 31 | | 85 | | 42 |
| 0 | 63 | | 71 | | 60 |
| 0 | 125 | | 99 | | 100 |
| | | | $ED_{90}$(g/ha) 53 | | $ED_{90}$(g/ha) 77 |
| 1 | 8 | 94 | - | 53 | - |
| 2 | 8 | 98 | (37) | 93 | (22) |
| 4 | 8 | 100 | (85) | 98 | (40) |
| 8 | 8 | 100 | (88) | 99 | (69) |
| 16 | 8 | 100 | (80) | 100 | (58) |
| 31 | 8 | 100 | (91) | 100 | (91) |
| | | $ED_{90}$ 0.6 | NA | $ED_{90}$ 2.7 | NA |
| 0.5 | 16 | 100 | - | 80 | - |
| 1 | 16 | 100 | - | 100 | - |
| 2 | 16 | 99 | (74) | 94 | (38) |
| 4 | 16 | 100 | (94) | 95 | (53) |
| 8 | 16 | 100 | (95) | 100 | (76) |
| 16 | 16 | 100 | (92) | 100 | (67) |
| | | $ED_{90}$ <0.5 | NA | $ED_{90}$ 0.6 | NA |
| 0.25 | 31 | 100 | - | 100 | - |
| 0.5 | 31 | 100 | - | 87 | - |
| 1 | 31 | 100 | - | 96 | - |
| 2 | 31 | 100 | (91) | 96 | (55) |
| 4 | 31 | 100 | (98) | 99 | (65) |
| 8 | 31 | 100 | (98) | 100 | (82) |
| | | $ED_{90}$ <0.25 | NA | $ED_{90}$ <0.25 | NA |
| 0.25 | 63 | 100 | - | 100 | - |
| 0.5 | 63 | 100 | - | 98 | - |
| 1 | 63 | 100 | - | 98 | - |
| 2 | 63 | 100 | (82) | 100 | (69) |
| 4 | 63 | 100 | (96) | 99 | (76) |
| 8 | 63 | 100 | (97) | 100 | (88) |
| | | $ED_{90}$ <0.25 | NA | $ED_{90}$ <0.25 | NA |

( ) Expected values by Limpel; - Not calculated; NA Not applicable.

Table 6

| Rate (g/ha) Compound 110 | Atrazine | % inhibition of growth Brassica kaber 2 leaves | | Solanum nigrum 1 leaf | |
|---|---|---|---|---|---|
| 2 | 0 | 45 | | 38 | |
| 4 | 0 | 84 | | 80 | |
| 8 | 0 | 98 | | 98 | |
| 16 | 0 | 99 | | 100 | |
| 31 | 0 | 100 | | 100 | |
| 63 | 0 | 100 | | 100 | |
| | | $ED_{90}$(g/ha) 6.38 | | $ED_{90}$(g/ha) 5.87 | |
| 0 | 8 | 0 | | 19 | |
| 0 | 16 | 35 | | 45 | |
| 0 | 31 | 41 | | 73 | |
| 0 | 63 | 91 | | 94 | |
| 0 | 125 | 100 | | 97 | |
| | | $ED_{90}$(g/ha) 62.14 | | $ED_{90}$(g/ha) 59.35 | |
| 1 | 8 | 98 | - | 93 | - |
| 2 | 8 | 100 | (45) | 100 | (50) |
| 4 | 8 | 100 | (84) | 100 | (84) |
| 8 | 8 | 100 | (98) | 100 | (98) |
| 16 | 8 | 100 | (99) | 100 | (100) |
| 31 | 8 | 100 | (100) | 100 | (100) |
| | | $ED_{90}$ 0.14 | NA | $ED_{90}$ 0.85 | NA |
| 0.5 | 16 | 98 | - | 94 | - |
| 1 | 16 | 98 | - | 100 | - |
| 2 | 16 | 99 | (64) | 100 | (66) |
| 4 | 16 | 100 | (90) | 100 | (89) |
| 8 | 16 | 100 | (99) | 100 | (99) |
| 16 | 16 | 100 | (99) | 100 | (100) |
| | | $ED_{90}$ (g/ha) 1.39 | NA | $ED_{90}$ 0.39 | NA |
| 0.25 | 31 | 90 | - | 98 | - |
| 0.5 | 31 | 97 | - | 98 | - |
| 1 | 31 | 100 | - | 100 | - |
| 2 | 31 | 100 | (68) | 100 | (83) |
| 4 | 31 | 100 | (91) | 100 | (95) |
| 8 | 31 | 100 | (99) | 100 | (99) |
| | | $ED_{90}$ (g/ha) 0.24 | NA | $ED_{90}$ $<0.25$ | NA |
| 0.25 | 63 | 90 | - | 99 | - |
| 0.5 | 63 | 100 | - | 99 | - |
| 1 | 63 | 100 | - | 100 | - |
| 2 | 63 | 100 | (95) | 100 | (96) |
| 4 | 63 | (96) | | | |
| 4 | 63 | 100 | (99) | 100 | (99) |
| 8 | 63 | 100 | (100) | 100 | (100) |
| | | $ED_{90}$ (g/ha) 0.25 | NA | $ED_{90}$ $<0.25$ | NA |

( ) Expected values by Limpel; - Not calculated; NA Not applicable.

Table 7

| Rate (g/ha) Compound 126 | Atrazine | % inhibition of growth Brassica kaber 2 leaves | | Solanum nigrum 2 leaves | |
|---|---|---|---|---|---|
| 2 | 0 | 0 | | 72 | |
| 4 | 0 | 0 | | 90 | |
| 8 | 0 | 0 | | 97 | |
| 16 | 0 | 42 | | 100 | |
| 31 | 0 | 69 | | 100 | |
| 63 | 0 | 66 | | 100 | |
| | | $ED_{50}$(g/ha) 28.09 | | $ED_{90}$(g/ha) 4.18 | |
| 0 | 8 | 0 | | 6 | |
| 0 | 16 | 0 | | 27 | |
| 0 | 31 | 17 | | 35 | |
| 0 | 63 | 27 | | 76 | |
| 0 | 125 | 75 | | 99 | |
| | | $ED_{50}$(g/ha) 78.24 | | $ED_{90}$(g/ha) 72.94 | |
| 1 | 8 | 1 | - | 89 | |
| 2 | 8 | 41 | (0) | 100 | (74) |
| 4 | 8 | 72 | (0) | 100 | (91) |
| 8 | 8 | 70 | (0) | 100 | (97) |
| 16 | 8 | 93 | (42) | 100 | (100) |
| 31 | 8 | 94 | (69) | 100 | (100) |
| | | $ED_{50}$(g/ha) 3.89 | NA | $ED_{90}$ 1.01 | NA |
| 0.5 | 16 | 26 | - | 86 | - |
| 1 | 16 | 10 | - | 99 | - |
| 2 | 16 | 70 | (0) | 100 | (80) |
| 4 | 16 | 61 | (0) | 100 | (93) |
| 8 | 16 | 89 | (0) | 100 | (98) |
| 16 | 16 | 80 | (42) | 100 | (100) |
| | | ED50(g/ha) 1.92 | NA | $ED_{90}$ 0.58 | NA |
| 0.25 | 31 | 33 | - | 94 | - |
| 0.25 | 31 | 24 | - | 97 | - |
| 1 | 31 | 35 | - | 100 | - |
| 2 | 31 | 59 | (17) | 100 | (82) |
| 4 | 31 | 66 | (17) | 100 | (93) |
| 8 | 31 | 89 | (17) | 100 | (98) |
| | | $ED_{50}$(g/ha) 1.41 | NA | $ED_{90}$ $<0.25$ | NA |
| 0.25 | 63 | 25 | - | 100 | - |
| 0.5 | 63 | 62 | - | 99 | - |
| 1 | 63 | 58 | - | 100 | - |
| 2 | 63 | 93 | (27) | 100 | (93) |
| 4 | 63 | 97 | (27) | 100 | (98) |
| 8 | 63 | 96 | (27) | 100 | (99) |
| | | $ED_{50}$(g/ha) 0.52 | NA | $ED_{90}$ $<0.25$ | NA |

( ) Expected value by Limpel; - Not calculated; NA Not applicable

Table 8

| Rate (g/ha) Compound 99 | Atrazine | % inhibition of growth Brassica kaber | | Sida spinosa | |
|---|---|---|---|---|---|
| 8 | 0 | 0 | | 0 | |
| 16 | 0 | 9 | | 17 | |
| 31 | 0 | 10 | | 26 | |
| 63 | 0 | 32 | | 52 | |
| 125 | 0 | 20 | | 88 | |
| 250 | 0 | 90 | | 97 | |
| | | $ED_{90}$(g/ha) 340.34 | | $ED_{90}$(g/ha) 146.26 | |
| 0 | 16 | 0 | | 10 | |
| 0 | 31 | 0 | | 2 | |
| 0 | 63 | 34 | | 15 | |
| 0 | 125 | 70 | | 23 | |
| 0 | 250 | 100 | | 37 | |
| 0 | 500 | 100 | | 95 | |
| | | $ED_{90}$(g/ha) 157.7 | | $ED_{90}$(g/ha) 478.75 | |
| 8 | 16 | 0 | (0) | 0 | (10) |
| 16 | 16 | 0 | (9) | 0 | (25) |
| 31 | 16 | 35 | (10) | 23 | (33) |
| 63 | 16 | 50 | (32) | 78 | (57) |
| 125 | 16 | 71 | (20) | 96 | (89) |
| 250 | 16 | 68 | (90) | 99 | (97) |
| | | ED90(g/ha) 258.25 | NA | ED90 104.73 | NA |
| 8 | 31 | 4 | (0) | 23 | (2) |
| 16 | 31 | 40 | (9) | 0 | (19) |
| 31 | 31 | 70 | (10) | 33 | (27) |
| 63 | 31 | 90 | (32) | 71 | (53) |
| 125 | 31 | 88 | (20) | 98 | (88) |
| 250 | 31 | 100 | (90) | 96 | (97) |
| | | $ED_{90}$(g/ha) 84.06 | NA | $ED_{90}$ 95.52 | NA |
| 4 | 63 | 99 | | 7 | - |
| 8 | 63 | 78 | (34) | 13 | (15) |
| 16 | 63 | 74 | (40) | 17 | (29) |
| 31 | 63 | 100 | (41) | 55 | (37) |
| 63 | 63 | 72 | (55) | 86 | (59) |
| 125 | 63 | 100 | (53) | 98 | (90) |
| | | $ED_{90}$(g/ha) 11.09 | NA | $ED_{90}$ 73.38 | NA |
| 2 | 125 | 100 | - | 50 | - |
| 4 | 125 | 100 | - | 65 | - |
| 8 | 125 | 100 | (70) | 65 | (23) |
| 16 | 125 | 75 | (73) | 36 | (36) |
| 31 | 125 | 97 | (73) | 91 | (56) |
| 63 | 125 | 100 | (80) | 92 | (63) |
| | | $ED_{90}$(g/ha) <2 | NA | $ED_{90}$ 28.4 | NA |

( ) Expected value by Limpel; - Not calculated; NA Not applicable.

Table 9

| Rate (g/ha) Compound 74 | Atrazine | % crop phytotoxicity Maize (3 leaves) | |
|---|---|---|---|
| 63 | 0 | 1 | |
| 125 | 0 | 3 | |
| 250 | 0 | 6 | |
| 500 | 0 | 10 | |
| 1000 | 0 | 30 | |
| 2000 | 0 | 58 | |
| | | $ED_{20}$(g/ha) 601 | |
| 0 | 250 | 0 | |
| 0 | 500 | 0 | |
| 0 | 1000 | 0 | |
| 0 | 2000 | 0 | |
| | | $ED_{20}$(g/ha) ∞ | |
| 31 | 250 | 0 | - |
| 63 | 250 | 2 | (1) |
| 125 | 250 | 2 | (3) |
| 250 | 250 | 5 | (6) |
| 500 | 250 | 6 | (10) |
| 1000 | 250 | 14 | (30) |
| | | $ED_{20}$(g/ha) >1000 | NA |
| 31 | 500 | 0 | - |
| 63 | 500 | 1 | (1) |
| 125 | 500 | 1 | (3) |
| 250 | 500 | 3 | (6) |
| 500 | 500 | 17 | (10) |
| 1000 | 500 | 23 | (30) |
| | | $ED_{20}$(g/ha) 783 | NA |
| 31 | 1000 | 0 | - |
| 63 | 1000 | 0 | (1) |
| 125 | 1000 | 0 | (3) |
| 250 | 1000 | 2 | (6) |
| 500 | 1000 | 6 | (10) |
| 1000 | 1000 | 29 | (30) |
| | | $ED_{20}$(g/ha) 836 | NA |
| 31 | 2000 | 0 | - |
| 63 | 2000 | 1 | (1) |
| 125 | 2000 | 2 | (3) |
| 250 | 2000 | 5 | (6) |
| 500 | 2000 | 13 | (10) |
| 1000 | 2000 | 35 | (30) |
| | | $ED_{20}$(g/ha) 643 | NA |

( ) Expected value by Limpel; - Not calculated; NA Not applicable.

According to a further feature of the present invention, there is provided a product comprising (a) atrazine and (b) a 3-benzoylpiperidine-2,4-dione derivative of general formula I as hereinbefore defined or a salt thereof with an agriculturally acceptable base as a combined preparation for simultaneous, separate or sequential use in controlling the growth of weeds at a maize grop locus.

According to a further feature of the present invention, there are provided herbicidal compositions comprising (a) atrazine and (b) a 3-benzoylpiperidine-2,4-dione derivative of general formula I as hereinbefore

defined or a salt thereof with an agriculturally acceptable base, for example in proportions of 60:1 to 1:2 preferably 20:1 to 2:1, wt/wt of (a) to acid equivalent (b), in association with, and preferably homogeneously dispersed in, one or more herbicidally-acceptable diluents or carriers and/or surface-active agents (i.e. diluents or carriers or surface-active agents of the type generally accepted in the art as being suitable for use in herbicidal compositions and which are compatible with atrazine and 3-benzoylpiperidine-2,4-dione derivatives. The term "homogeneously dispersed" is used to include compositions in which atrazine and 3-benzoylpiperidine-2,4-dione derivatives are dissolved in the other components. The term " herbicidal compositions" is used in a broad sense to include not only compositions which are ready for use as herbicides but also concentrates which must be diluted before use. Preferably, the compositions contain from 0.05 to 90% by weight of atrazine and 3-benzoylpiperidine-2,4-dione derivative(s).

The herbicidal compositions may contain both a diluent or carrier and a surface-active (e.g. wetting, dispersing, or emulsifying) agent. Surface-active agents which may be present in herbicidal compositions of the present invention may be of the ionic or non-ionic types, for example sulphoricinoleates, products based on condensates of ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts or sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, adsorbent carbon black and clays such as kaolin and bentonite. The solid compositions (which may take the form of dusts, granules or wettable powders) are preferably prepared by grinding atrazine and the 3-benzoylpiperidine-2,4-dione derivative with solid diluents or by impregnating the solid diluents or carriers with solutions of atrazine and the 3-benzoylpiperidine-2,4-dione derivative in volatile solvents, evaporating the solvents and, if necessary, grinding the products so as to obtain powders. Granular formulations may be prepared by absorbing atrazine and the 3-benzoylpiperidine-2,4-dione derivative (dissolved in volatile solvents) onto the solid diluents or carriers in granular form and evaporating the solvents, or by granulating compositions in powder form obtained as described above. Solid herbicidal compositions, particularly wettable powders, may contain wetting or dispersing agents (for example of the types described above), which may also, when solid, serve as diluents or carriers.

Liquid compositions according to the invention may take the form of aqueous, organic or aqueous-organic solutions, suspensions and emulsions which may incorporate a surface-active agent. Suitable liquid diluents for incorporation in the liquid compositions include water, acetophenone, cyclohexanone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers.

Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of atrazine and 3-benzoylpiperidine-2,4-dione derivative may be used in the form of self-emulsifying concentrates containing the active substances dissolved in the emulsifying agents or in solvents containing emulsifying agents compatible with the active substances, the simple addition of water to such concentrates producing compositions ready for use.

Liquid concentrates in which the diluent or carrier is an oil may be used without further dilution using the electrostatic spray technique.

Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are aqueous suspension concentrates which comprise from 10 to 70% w/v of atrazine and 3-benzoylpiperidine-2,4-dione derivative, from 2 to 10% w/v of surface-active agent, from 0.1 to 5% w/v of thickener and from 15 to 87.9% by volume of water; wettable powders which comprise from 10 to 90% w/w of atrazine and 3-benzoylpiperidine-2,4-dione derivative, from 2 to 10% w/w of surface-active agent and from 8 to 88% of solid diluent or carrier; liquid water soluble concentrates which comprise from 10 to 30% w/v of atrazine and 3-benzoylpiperidine-2,4-dione derivative, from 5 to 25% w/v of surface-active agent and from 45 to 85% by volume of water-miscible solvent, e.g. dimethylformamide; liquid emulsifiable suspension concentrates which comprise from 10 to 70% w/v of atrazine and 3-benzoylpiperidine-2,4-dione derivative, from 5 to 15% w/v of surface-active agent, from 0.1 to 5% w/v of thickener and from 10 to 84.9% by volume of organic solvent; granules which comprise from 2 to 10% w/w of atrazine and 3-benzoylpiperidine-2,4-dione derivative, from 0.5 to 2% w/w of surface-active agent and from 88 to 97.5% w/w of granular carrier and emulsifiable concentrates which comprise from 0.05 to 90% w/v, and preferably from 1 to 60% w/v, of atrazine and 3-benzoylpiperidine-2,4-dione derivative, from 0.01 to 10% w/v, and preferably from 1 to 10% w/v, of surface-active agent and from 9.99 to 99.94%, and preferably from 39 to 98.99%, by volume of organic solvent.

Herbicidal compositions according to the present invention may also comprise atrazine and 3-benzoylpiperidine-2,4-dione derivative in association with, and preferably homogeneously dispersed in, one or more other

pesticidally active compounds and, if desired, one or more compatible pesticidally acceptable diluents or carriers, surface-active agents and conventional adjuvants as hereinbefore described. Examples of other pesticidally active compounds which may be included in, or used in conjunction with, the herbicidal compositions of the present invention include herbicides, for example to increase the range of weed species controlled, for example, alachlor (2-chloro-2,6-diethyl-N-methoxymethylacetanilide), bentazone (3-isopropyl-1H-2,1,3-benzothiadiazin-4(3H)-one 2,2-dioxide), bromoxynil (3,5-dibromo-4-hydroxybenzonitrile), cyanazine (2 chloro-4-(1-cyano-1-methylethylamino)-6-ethylamino-1,3,5-triazine), and 2,4-D (2,4-dichlorophenoxy)acetic acid; insecticides for example carbamates (e.g. carbofuran), organo-phosphates (e.g. chlorpyrifos), synthetic pyrethroids (e.g. cypermethrin), acyl ureas (e.g. teflubenzuron) and Bacillus thuringiensis, and fungicides for example metalaxyl, carboxin and captafol. Other biologically active materials which may be included in, or used in conjunction with, the herbicidal compositions of the present invention are plant growth regulators, and fertilizers containing, for example, nitrogen, potassium and phosphorus and trace elements known to be essential to successful plant life, e.g. iron, magnesium, zinc, manganese, cobalt and copper.

Pesticidally active compounds and other biologically active materials which may be included in, or used in conjunction with, the herbicidal compositions of the present invention, for example those hereinbefore mentioned, and which are acids, may, if desired, be utilized in the form of conventional derivatives, for example alkali metal and amine salts and esters.

The compositions of the invention may be made up as an article of manufacture comprising atrazine and 3-benzoylpiperidine-2,4-dione derivative and optionally other biologically active compounds as hereinbefore described or, as is preferred, a herbicidal composition as hereinbefore described, and preferably a herbicidal concentrate which must be diluted before use, comprising atrazine and 3-benzoylpiperidine-2,4-dione derivative within a container for the aforesaid atrazine and 3-benzoylpiperidine-2,4-dione derivative or a said herbicidal composition, and instructions physically associated with the aforesaid container setting out the manner in which the aforesaid atrazine and 3-benzoylpiperidine-2,4-dione derivative herbicidal composition contained therein is to be used to control the growth of weeds. The containers will normally be of the types conventionally used for the storage of chamical substances which are solids at normal ambient temperatures and herbicidal compositions, particularly in the form of concentrates, for example cans and drums of metal, which may be internally-lacquered, and plastics materials, bottles of glass and plastics materials and, when the contents of the container is a solid, for example granular herbicidal compositions, boxes, for example of cardboard, plastics materials and metal, or sacks. The containers will normally be of sufficient capacity to contain amounts of the active ingredients or herbicidal compositions sufficient to treat at least 0.5 hectares of ground to control the growth of weeds therein but will not exceed a size which is convenient for conventional methods of handling. The instructions will be physically associated with the container, for example by being printed directly thereon or on a label or tag affixed thereto. The directors will normally indicate that the contents of the container, after dilution if necessary, are to be applied to control the growth of weeds at rates of application between 8 and 1500g of atrazine and between 0.5 and 500g a.e. of 3-benzoylpiperidine-2,4-dione derivatives per hectare in the manner and for the purposes hereinbefore described.

The following Examples illustrate herbicidal compositions according to the present invention and herbicidal compositions suitable for use in the method for controlling the growth of weeds according to the present invention.

Example 1

A water soluble powder was made from

| | |
|---|---|
| Compound 1 | 64% w/w |
| Sodium carbonate | 20% w/w |
| Sodium dodecylbenzenesulphonate | 8% w/w |
| Sodium polymetaphosphate | 4% w/w |
| Precipitated silica | 4% w/w |

by mixing all the ingredients together and milling in a hammer mill.

Example 2

A water soluble powder was made from

| | |
|---|---|
| Compound 74 | 60% w/w |
| Sodium carbonate | 25% w/w |
| Atlox 4901 | 3.75% w/w |
| Sodium metaphosphate | 4% w/w |
| Precipitated silica | 7.25% w/w |

by mixing all the ingredients together and milling in a hammer mill.

Example 3

A water soluble powder was made from

| | |
|---|---|
| Compound 1 | 60% w/w |
| Sodium carbonate | 26% w/w |
| Atlox 4901 | 3.75% w/w |
| Sodium polymetaphosphate | 4% w/w |
| Precipitated silica | 6.25% w/w |
| Precipitated silica | 11.05% w/w |

By mixing all the ingredients together and milling in a hammer mill.

Example 4

A water soluble powder was made from

| | |
|---|---|
| Compound 99 | 60% w/w |
| Sodium carbonate | 23% w/w |
| Atlox 4901 | 3.75% w/w |
| Sodium polymetaphosphate | 4% w/w |
| Precipitated silica | 9.25% w/w |

By mixing all the ingredients together and milling in a hammer mill.

Example 5

A water soluble powder was made from

| | |
|---|---|
| Compound 110 | 60% w/w |
| Sodium carbonate | 24% w/w |
| Atlox 4901 | 3.75% w/w |
| Sodium polymetaphosphate | 4% w/w |
| Precipitated silica | 8.25% w/w |

By mixing all the ingredients together and milling in a hammer mill.

Example 6

A water soluble powder was made from

| | |
|---|---|
| Compound 126 | 60% w/w |
| Sodium carbonate | 21.2% w/w |
| Atlox 4901 | 3.75% w/w |
| Sodium polymetaphosphate | 4% w/w |
| Precipitated silica | 11.05% w/w |

By mixing all the ingredients together and milling in a hammer mill.

Example 7

A 60:1 mixture was formed by tank mixing 3 litres of a commercially available aqueous suspension concentrate formulation containing 50% w/w atrazine with 42g of the composition of Example 2 in a volume of 200 litres of 0.2% v/v nonylphenol ethylene oxide condensate solution in water. The resulting spray fluid was applied to one hectare of maize to control Chenopodium album and Solanum nigrum.

Example 8

A 1:2 mixture was formed by tank mixing 500ml of a commercially available aqueous suspension concentrate formulation containing 50% w/v atrazine with 833g of the composition of Example 2 in a volume of 200 litres of 0.2% v/v nonylphenol ethylene oxide condensate solution in water. The resulting spray fluid was applied to one hectare of maize to control Amaranthus retroflexus, Xanthium pennsylvanicum, Eleusine indica

and Digitaria sanguinalis.

In the mixed formulations in the Examples hereinbefore, the 3-benzoylpiperidine-2,4-dione derivative may be replaced by other 3-benzoylpiperidine-2,4-dione derivatives of general formula I.

The following Examples and Reference Examples illustrate the preparation of compounds of general formula I.

## EXAMPLE 9

### Compound 1

A solution of 4-chloro-2-nitrobenzoyl chloride (4.4g) in dry dichloromethane (5ml) was added at 5-10°C to a stirred solution of 6,6-dimethylpiperidine-2,4-dione (2.8g) and triethylamine (2.8ml) in dry dichloromethane (50ml) and the mixture was stirred at ambient temperature for 18 hours. Triethylamine (8.4ml) and acetone cyanohydrin (0.4ml) were added successively to the solution and the mixture was stirred at ambient temperature for 4 hours. The resulting solution was washed successively with 2N hydrochloric acid (25ml) and water (3x25ml), dried over sodium sulphate and evaporated under reduced pressure to give a yellow solid which was recrystallised from acetonitrile to give 3-(4-chloro-2-nitrobenzoyl)-6,6-dimethylpiperidine-2,4-dione (4g), mp 162-162.5° C, as a yellow crystalline solid.

## EXAMPLE 10

### Compound 6

A solution of 4-chloro-2-nitrobenzoyl chloride (5.8g) in dry dichloromethane (10ml) was added over 5 minutes to a stirred solution of piperidine-2,4-dione (3.0g) and triethylamine (5.5ml) in dry dichloromethane (100ml) and the mixture was stirred at ambient temperature for 3 hours. Acetone cyanohydrin (0.5ml) was added and the mixture was stirred at ambient temperature for 18 hours. The solution was washed successively with 2N hydrochloric acid (50ml) and water (2x100ml), dried over sodium sulphate and evaporated under reduced pressure to give a solid residue which was recrystallised from ethyl acetate (70ml) to give 3-(4-chloro-2-nitrobenzoyl)piperidine-2,4-dione (1.6g), mp 161-164°C, as a light brown crystalline solid.

Piperidine-2,4-dione is a known compound [S.Toda et al, J. Antibiotics XXXIII, 173 (1980)].

## EXAMPLE 11

### Compounds 74, 99, 103, 110, 126 and 135

By processing in a similar manner to that hereinbefore described in Example 6 there were prepared the compounds of general formula I defined in Table I

TABLE I

| Compound | $R^1$ | $R^2$ | $R^3$ | $R^4$ | mp°C |
|---|---|---|---|---|---|
| 74 | H | H | $2\text{-}NO_2\text{-}4\text{-}CF_3$ | | 154-156 |
| 99 | $CH_3$ | $CH_3$ | $2\text{-}NO_2\text{-}4\text{-}CF_3$ | | 147-150 |
| 103 | $CH_3$ | $CH_3$ | $2\text{-}NO_2\text{-}4\text{-}SO_2CH_3$ | | 168-170 |
| 110 | H | H | $2\text{-}NO_2\text{-}4\text{-}SO_2CH_3$ | | 157-158 |
| 126 | H | H | $2\text{-}Cl\text{-}4\text{-}SO_2CH_3$ | | 187-188 |
| 135 | $CH_3$ | $CH_3$ | $2\text{-}Cl\text{-}4\text{-}SO_2CH_3$ | | 216 |

### REFERENCE EXAMPLE 1

A mixture of diethyl 6,6-dimethylpiperidine-2,4-dione-3-carboxylate (26.3g), water (30ml) and concentrated hydrochloric acid (3 drops) in acetonitrile (300ml) was heated at reflux for 4 hours. The cooled solution was evaporated under reduced pressure and the residue recrystallised from water (50ml) to give 6,6-dimethylpiperidine-2,4-dione (7.3g), mp 183-184°C, as a cream crystalline solid.

## REFERENCE EXAMPLE 2

A solution of methyl 3-(ethoxycarbonylacetamido)-3-methylbutyrate (45g) and sodium metal (4.22g) in

anhydrous methanol (450ml) was heated at a reflux for 3 hours. The cooled mixture was evaporated under reduced pressure and the residue dissolved in water (200ml). The aqueous solution was washed with ether (3x100ml), acidified with 2N hydrochloric acid and the acidic mixture extracted with dichloromethane (3x100ml). The combined extracts were washed with water (2x100ml), dried over magnesium sulphate and evaporated under reduced pressure to give diethyl 6,6-dimethylpiperidine-2,4-dione-3-carboxylate (26.3g), mp 170-172°C, as a cream crystalline solid.

## REFERENCE EXAMPLE 3

A solution of ethyl malonoyl chloride (31g) in dry dichloromethane (50ml) was added at 0-5°C to a well stirred mixture of methyl 3-aminoisovalerate hydrochloride (33.5g) and dry triethylamine ( 58.5ml ) in dry dichloromethane (300ml ) and the mixture stirred at ambient temperature for 18 hours. The mixture was washed successively with 2N hydrochloric acid (50ml), water (50ml), 2N sodium carbonate (25ml) and water (3x50ml) dried over magnesium sulphate and evaporated under reduced pressure to give methyl 3-(ethoxycarbonylacetamido)-3-methylbutyrate (45g), as a clear orange oil.

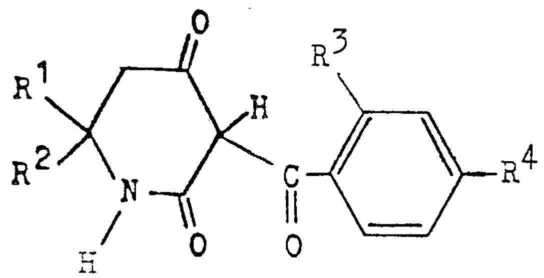

I

## Claims

1. A method for the control of the growth of weeds at a maize crop locus which comprises applying to the locus (a) atrazine, which is 2-chloro-4-ethylamino-6-isopropylamino-1,3,5-triazine, and (b) a 3-benzoylpiperidine-2,4-dione derivative of formula (I):

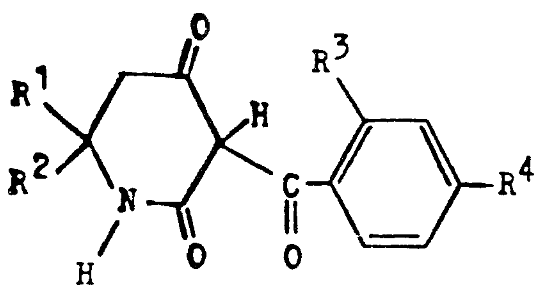

I

wherein $R^1$ and $R^2$ both represent hydrogen atoms or both represent methyl groups, $R^3$ represents the nitro group and $R^4$ represents the chlorine atom or the trifluoromethyl group, or $R^3$ represents the chlorine atom or the nitro group and $R^4$ represents the methylsulphonyl group, or a salt thereof with an agriculturally acceptable base.

2. A method according to claim 1 in which the application rate of (a) is from 8 to 1500 g/ha and the application rate of (b) is from 0.5 to 500 g acid equivalents/ha.

3. A method according to claim 2, in which the application rate of (a) is from 250 to 1500 g/ha and the application rate of (b) is from 25 to 500 g acid equivalents/ha.

4. A method according to claim 3, in which the application rate of (a) is from 500 to 1000 g/ha and the application rate of (b) is from 50 to 250 g acid equivalents/ha.

5. A method according to any one of the preceding claims in which the weight ratio of (a) to acid equivalent of (b) is from 60:1 to 1:2.

6. A method according to any one of the preceding claims in which the weight ratio of (a) to acid equivalent of (b) is from 20:1 to 2:1.

7. A product comprising (a) atrazine, which is 2-chloro-4-ethylamino-6-isopropylamino-1,3,5-triazine, and (b) a 3-benzoylpiperidine-2,4-dione derivative of formula I as defined in claim 1, or a salt thereof with an agriculturally acceptable base, as a combined preparation for simultaneous, separate or sequential use in controlling the growth of weeds at a maize crop locus.

8. A herbicidal composition comprising (a) atrazine which is 2-chloro-4-ethylamino-6-isopropylamino-1,3,5triazine and (b) a 3-benzoylpiperidine-2,4-dione derivative of formula I as defined in claim 1 or a salt thereof with an agriculturally acceptable base, in association with a herbicidally acceptable diluent or carrier and/or surface-active agent.

9. A composition according to claim 8 in which the weight ratio of (a) to acid equivalent of (b) is from 60:1 to 1:2.

10. A composition according to claim 8 or 9 in which the weight ratio of (a) to acid equivalent of (b) is from 20:1 to 2:1.

FIGURE 1

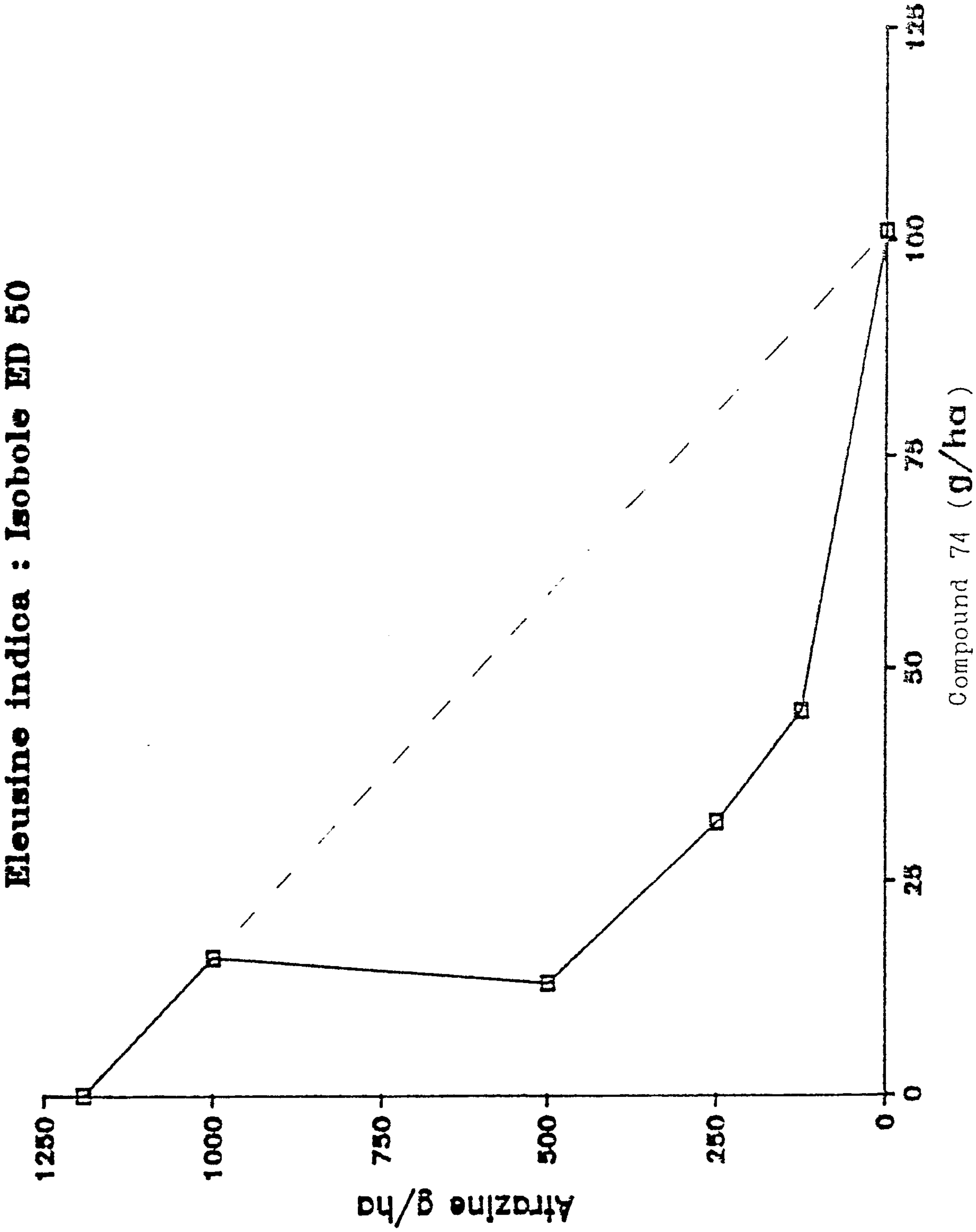
Eleusine indica : Isobole ED 50
Atrazine g/ha
1250
1000
750
500
250
0
Compound 74 (g/ha)
0
25
50
75
100
125

FIGURE 2

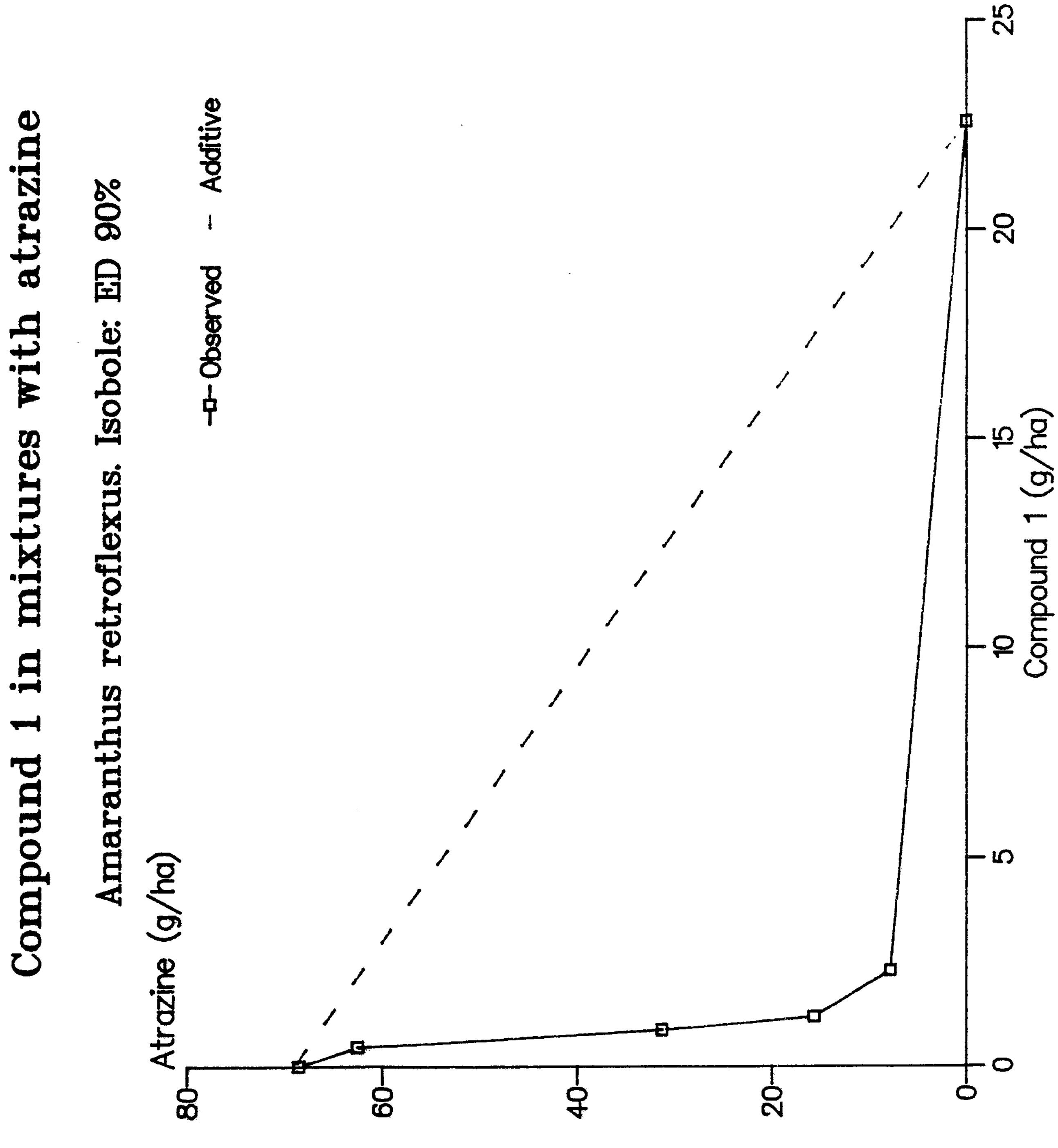
Compound 1 in mixtures with atrazine
Amaranthus retroflexus. Isobole: ED 90%
Observed
Additive
Atrazine (g/ha)
80
60
40
20
0
0
5
10
15
20
25
Compound 1 (g/ha)

FIGURE 3

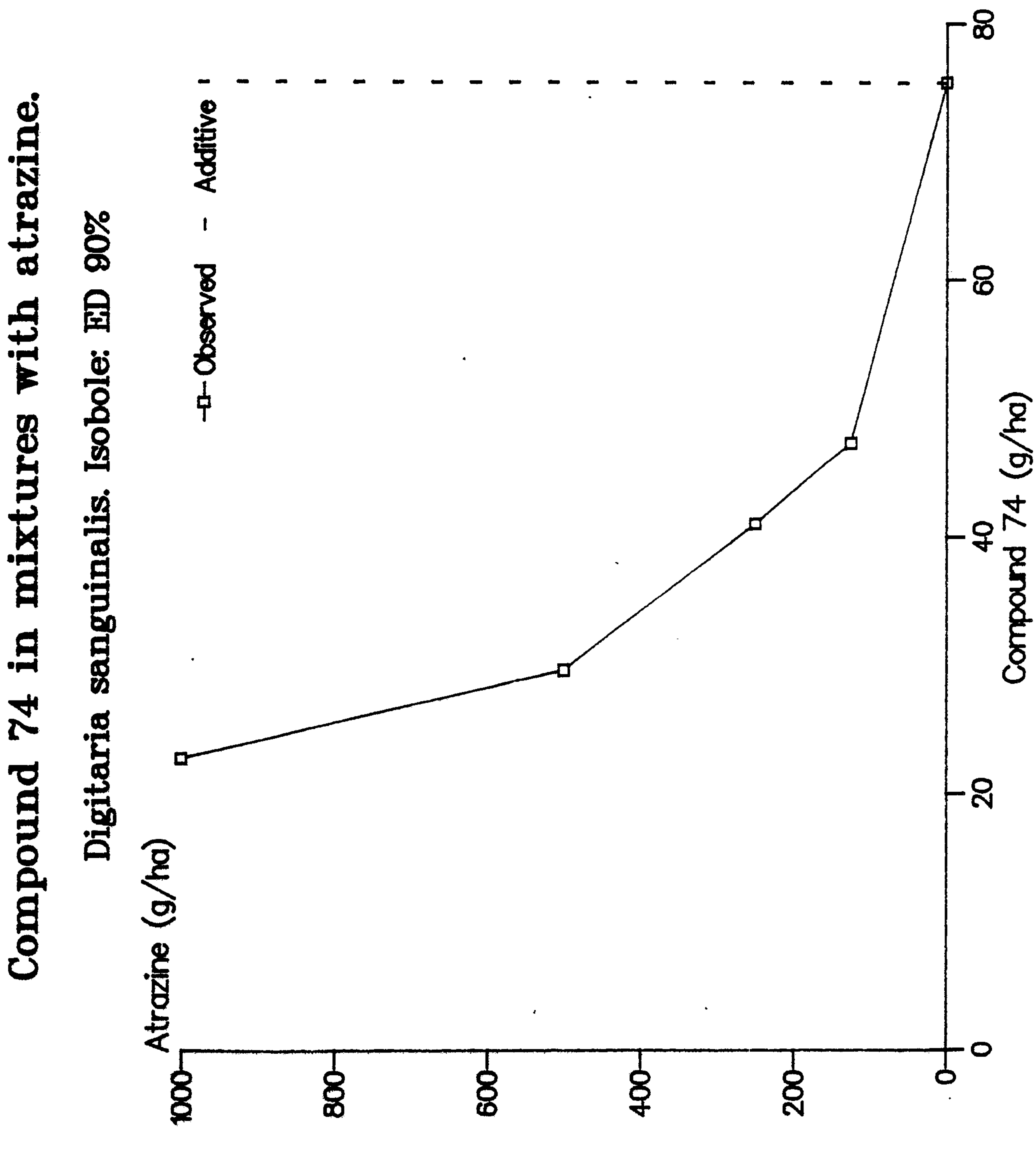
Compound 74 in mixtures with atrazine.
Digitaria sanguinalis. Isobole: ED 90%
Atrazine (g/ha)
-□- Observed - Additive
Compound 74 (g/ha)
1000
800
600
400
200
0
0
20
40
60
80

FIGURE 4

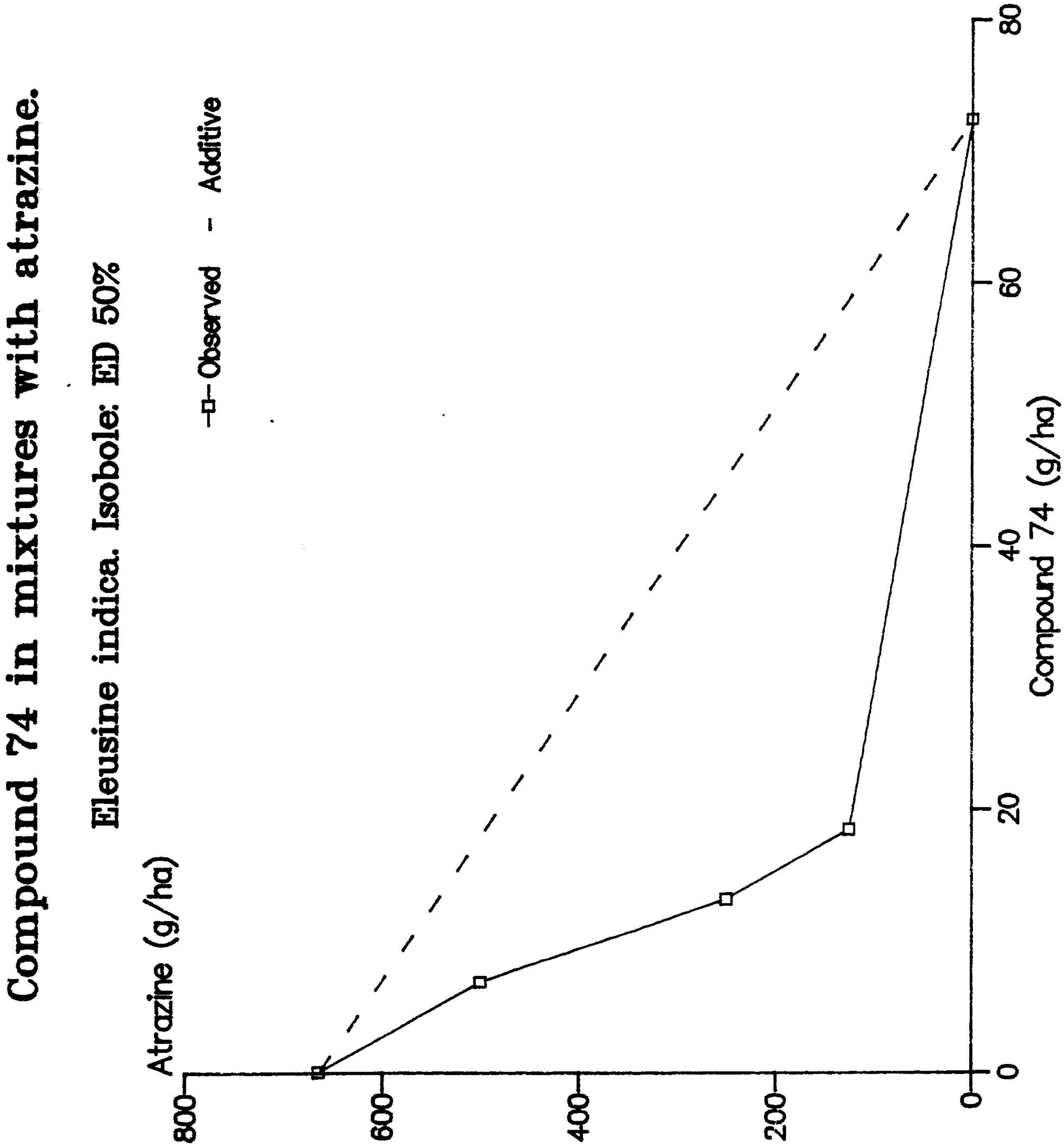

Compound 74 in mixtures with atrazine.
Eleusine indica. Isobole: ED 50%
Observed
Additive
Atrazine (g/ha)
800
600
400
200
0
0
20
40
60
80
Compound 74 (g/ha)

FIGURE 5

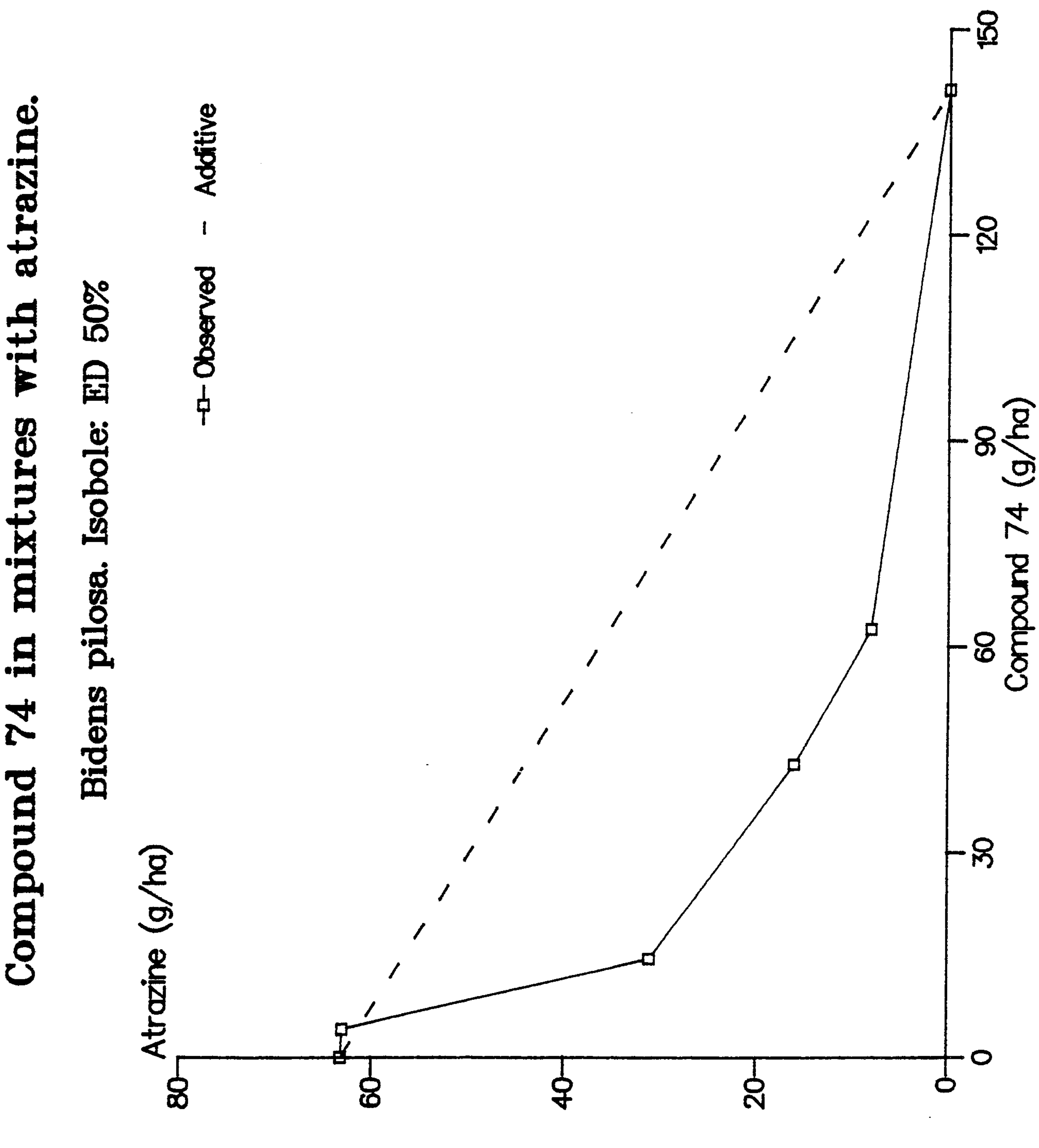
Compound 74 in mixtures with atrazine.
Bidens pilosa. Isobole: ED 50%
Observed
Additive
Atrazine (g/ha)
80
60
40
20
0
0
30
60
90
120
150
Compound 74 (g/ha)

FIGURE 6

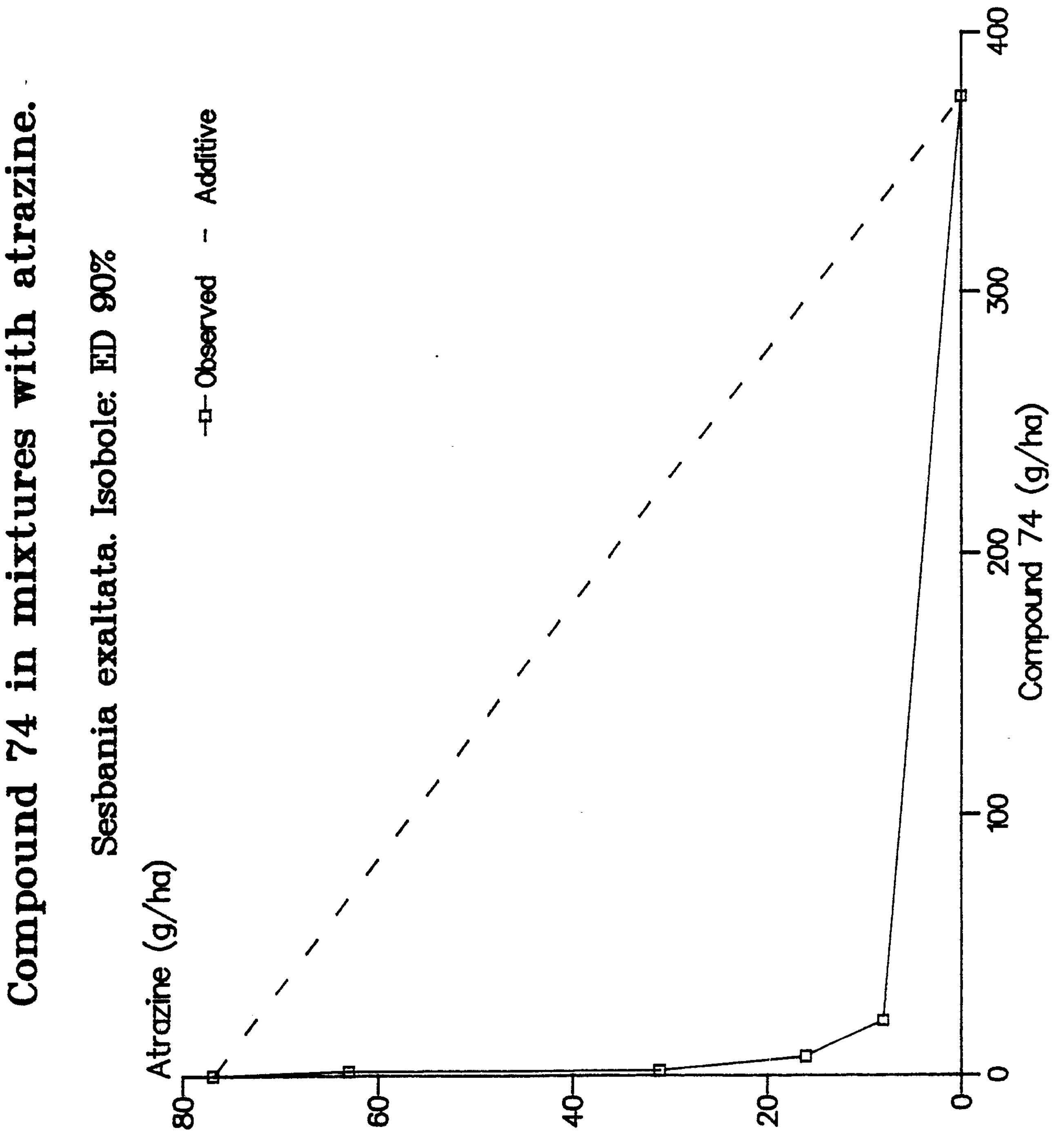

Compound 74 in mixtures with atrazine.
Sesbania exaltata. Isobole: ED 90%
Observed
Additive
Atrazine (g/ha)
80
60
40
20
0
0
100
200
300
400
Compound 74 (g/ha)

FIGURE 7

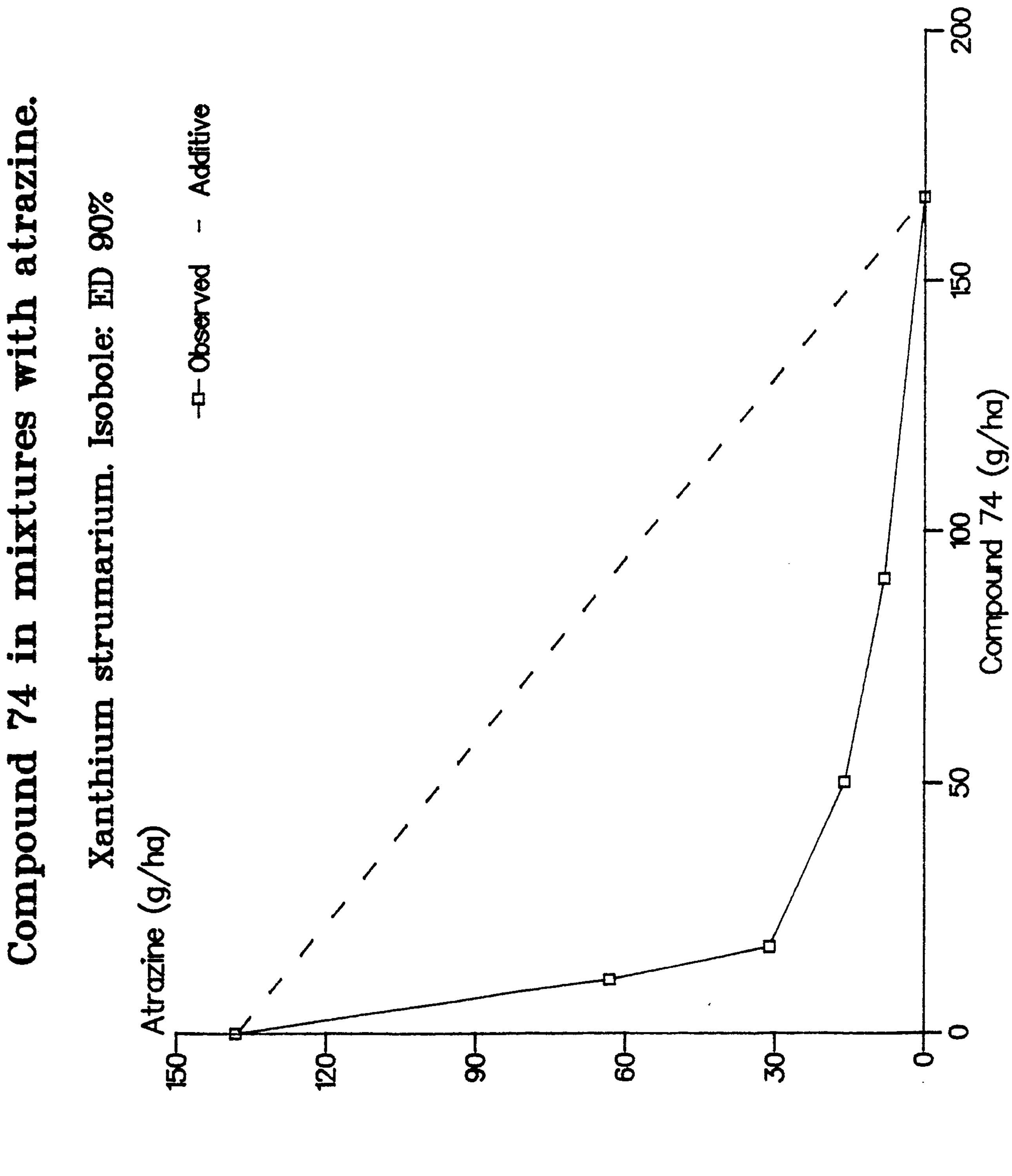
Compound 74 in mixtures with atrazine.
Xanthium strumarium. Isobole: ED 90%
Observed
Additive
Atrazine (g/ha)
150
120
90
60
30
0
Compound 74 (g/ha)
0
50
100
150
200

FIGURE 8

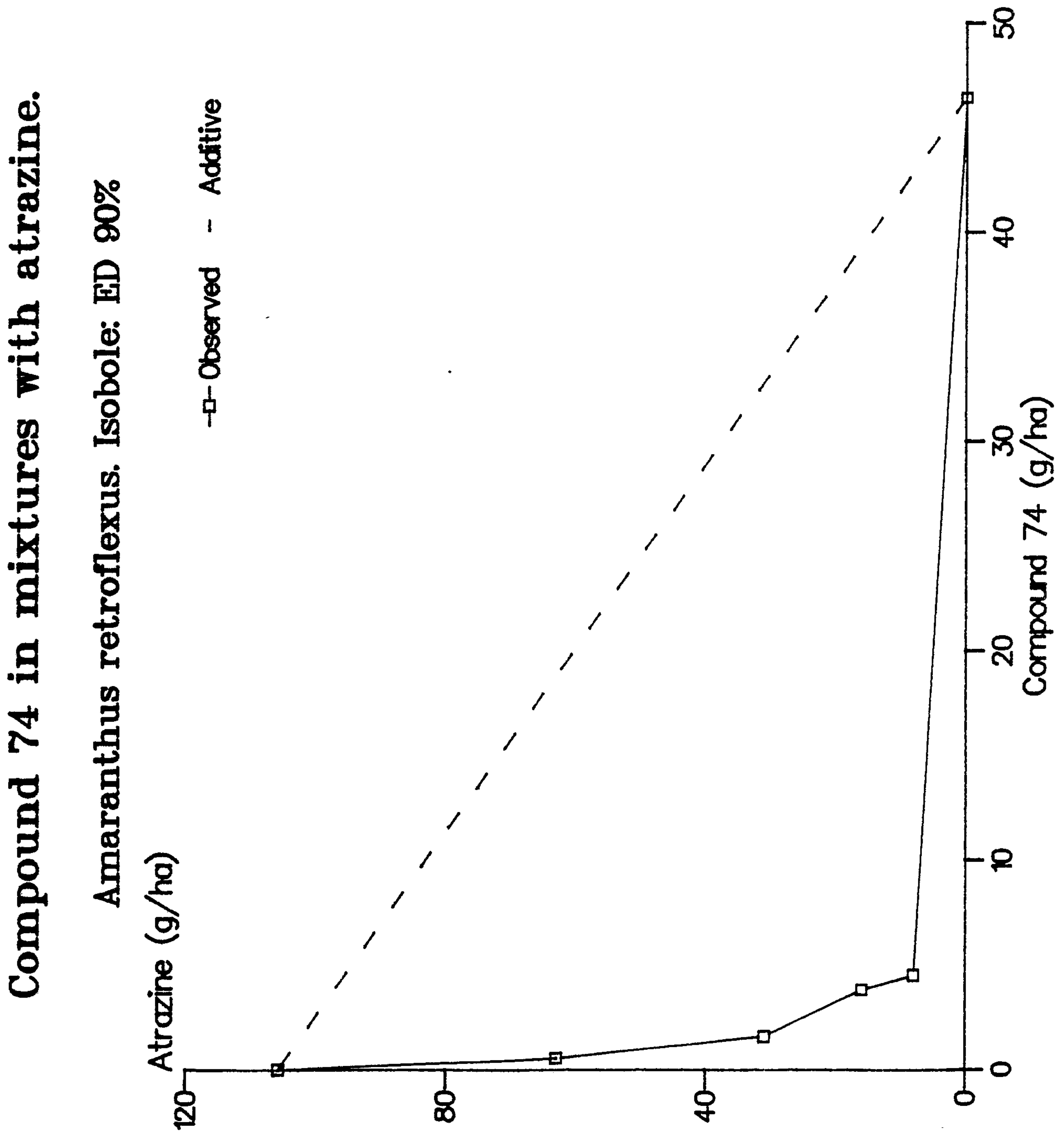
Compound 74 in mixtures with atrazine.
Amaranthus retroflexus. Isobole: ED 90%
Observed
Additive
Atrazine (g/ha)
120
80
40
0
Compound 74 (g/ha)
0
10
20
30
40
50

FIGURE 9

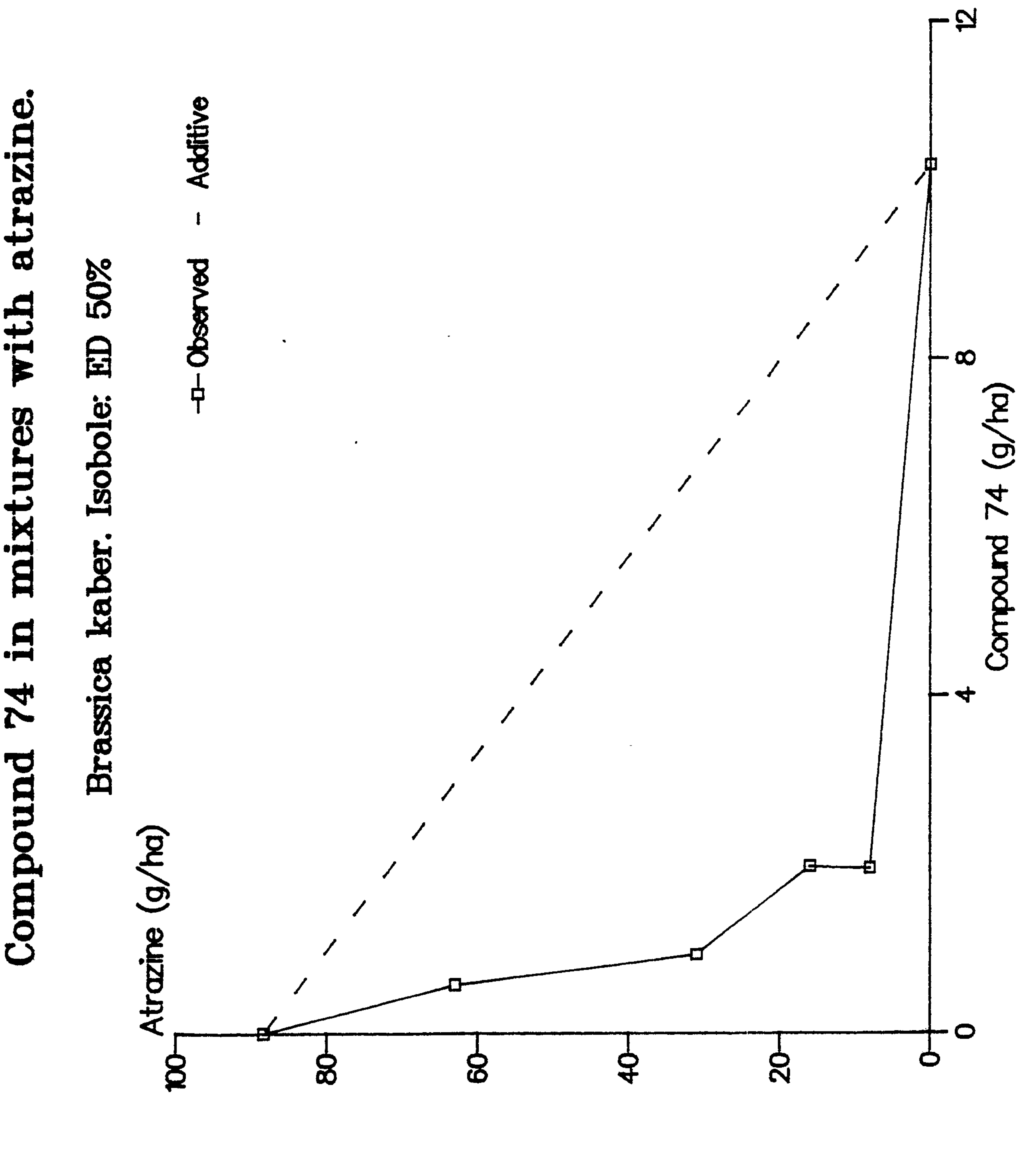

Compound 74 in mixtures with atrazine.
Brassica kaber. Isobole: ED 50%
Observed
Additive
Atrazine (g/ha)
100
80
60
40
20
0
Compound 74 (g/ha)
0
4
8
12

FIGURE 10

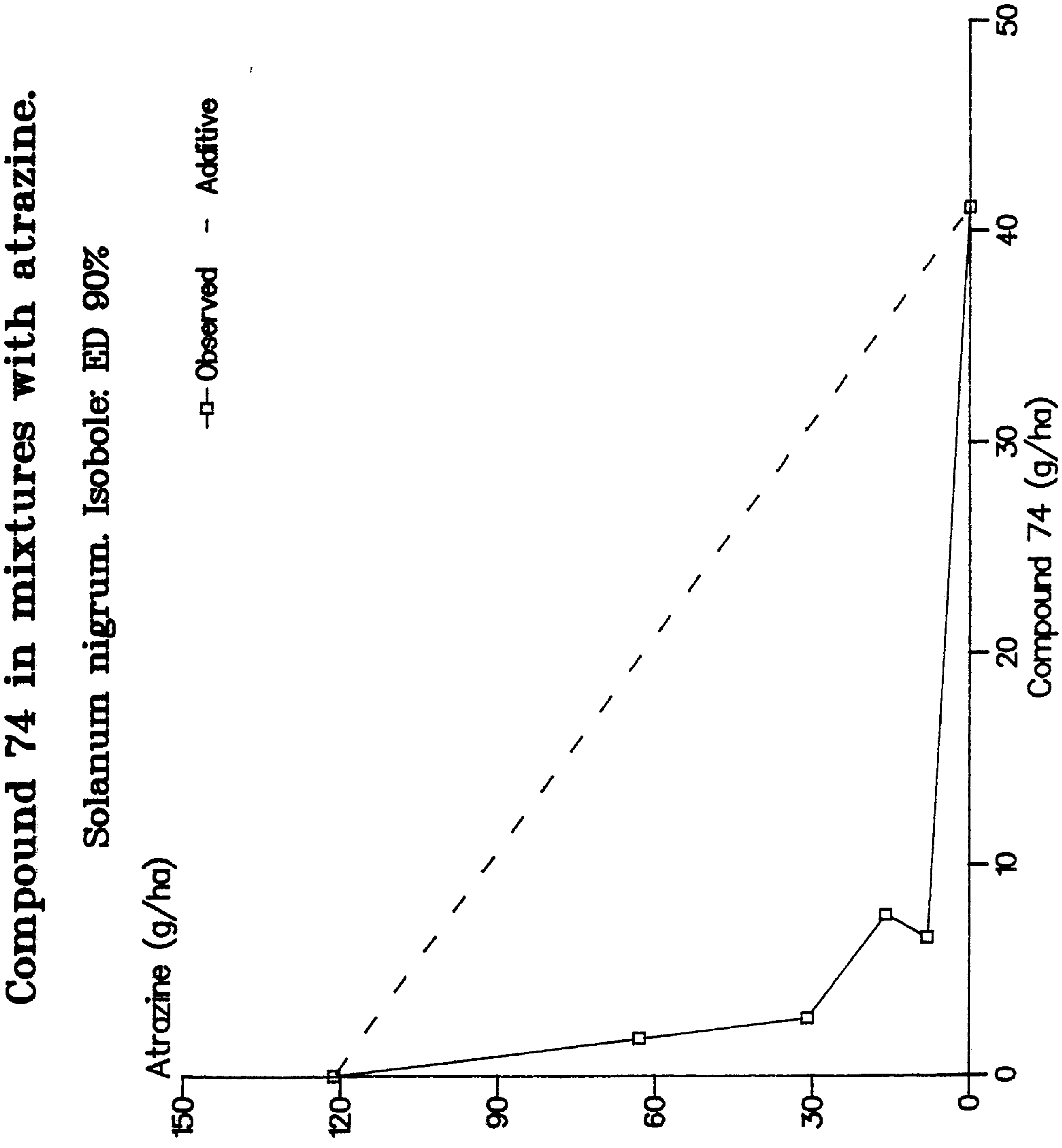
Compound 74 in mixtures with atrazine.
Solanum nigrum. Isobole: ED 90%
Observed
Additive
Atrazine (g/ha)
150
120
90
60
30
0
Compound 74 (g/ha)
0
10
20
30
40
50

FIGURE 11

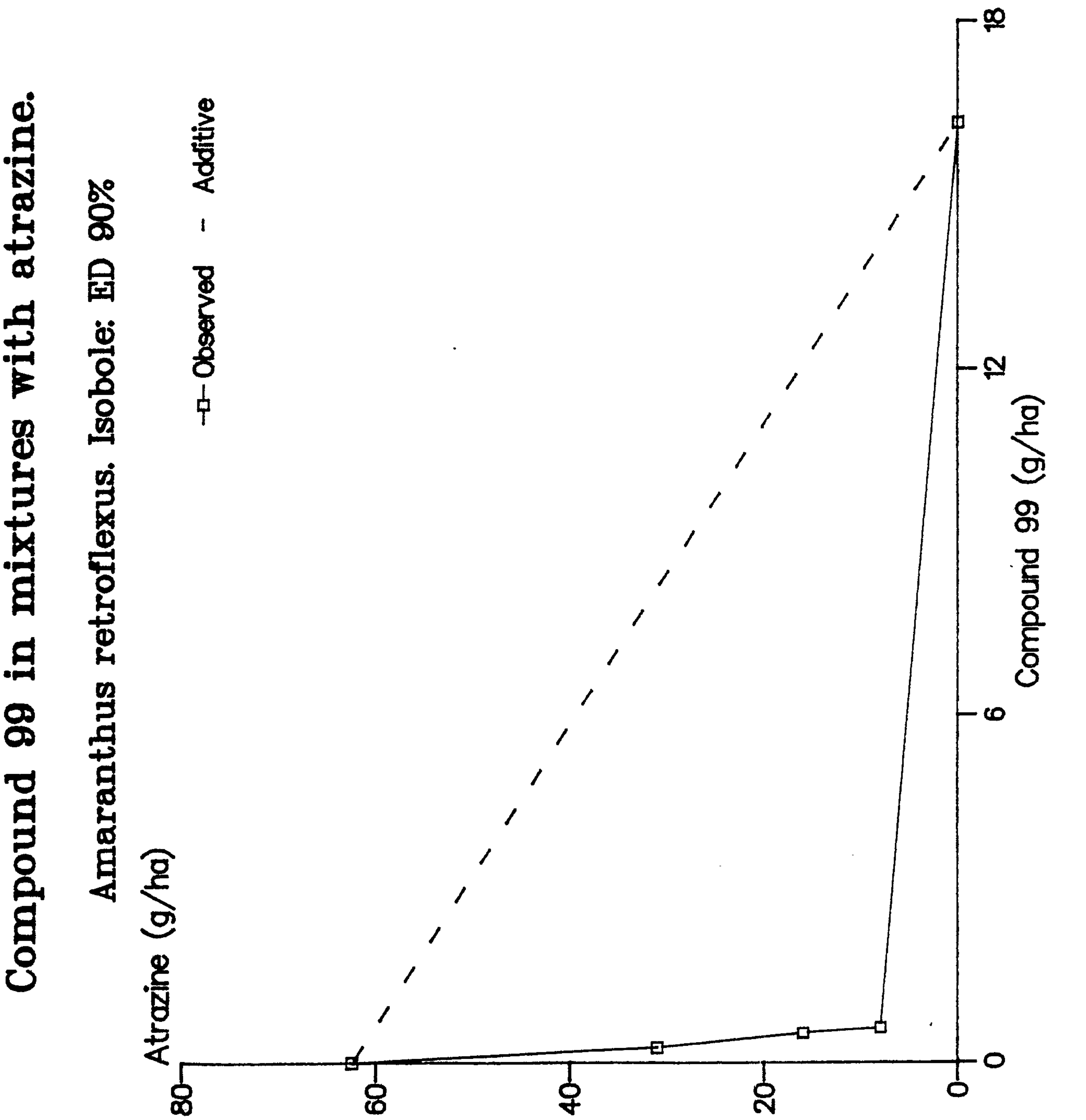
Compound 99 in mixtures with atrazine.
Amaranthus retroflexus. Isobole: ED 90%
Observed
Additive
Atrazine (g/ha)
80
60
40
20
0
0
6
12
18
Compound 99 (g/ha)

FIGURE 12

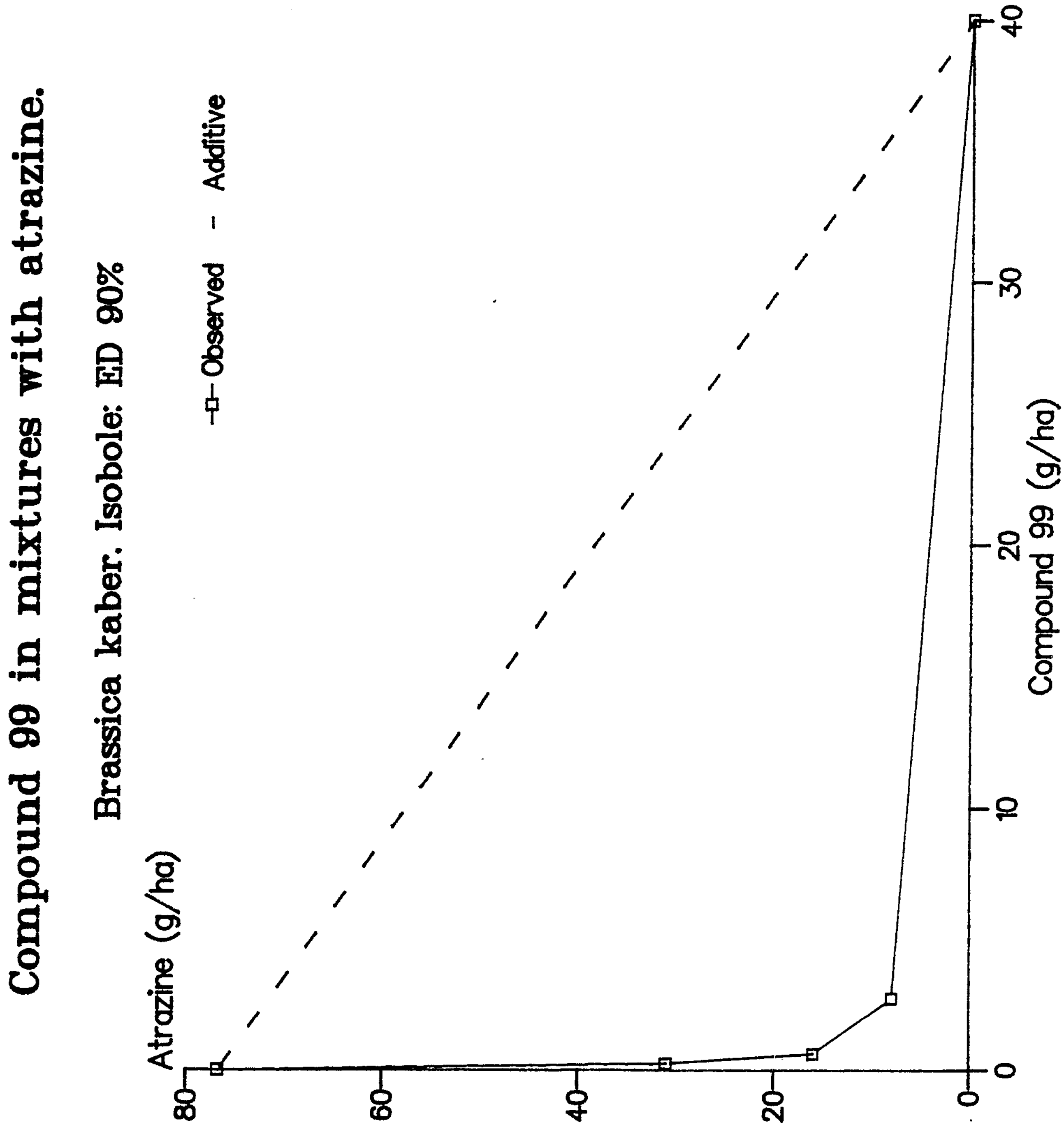
Compound 99 in mixtures with atrazine.
Brassica kaber. Isobole: ED 90%
Observed
Additive
Atrazine (g/ha)
80
60
40
20
0
Compound 99 (g/ha)
0
10
20
30
40

FIGURE 13

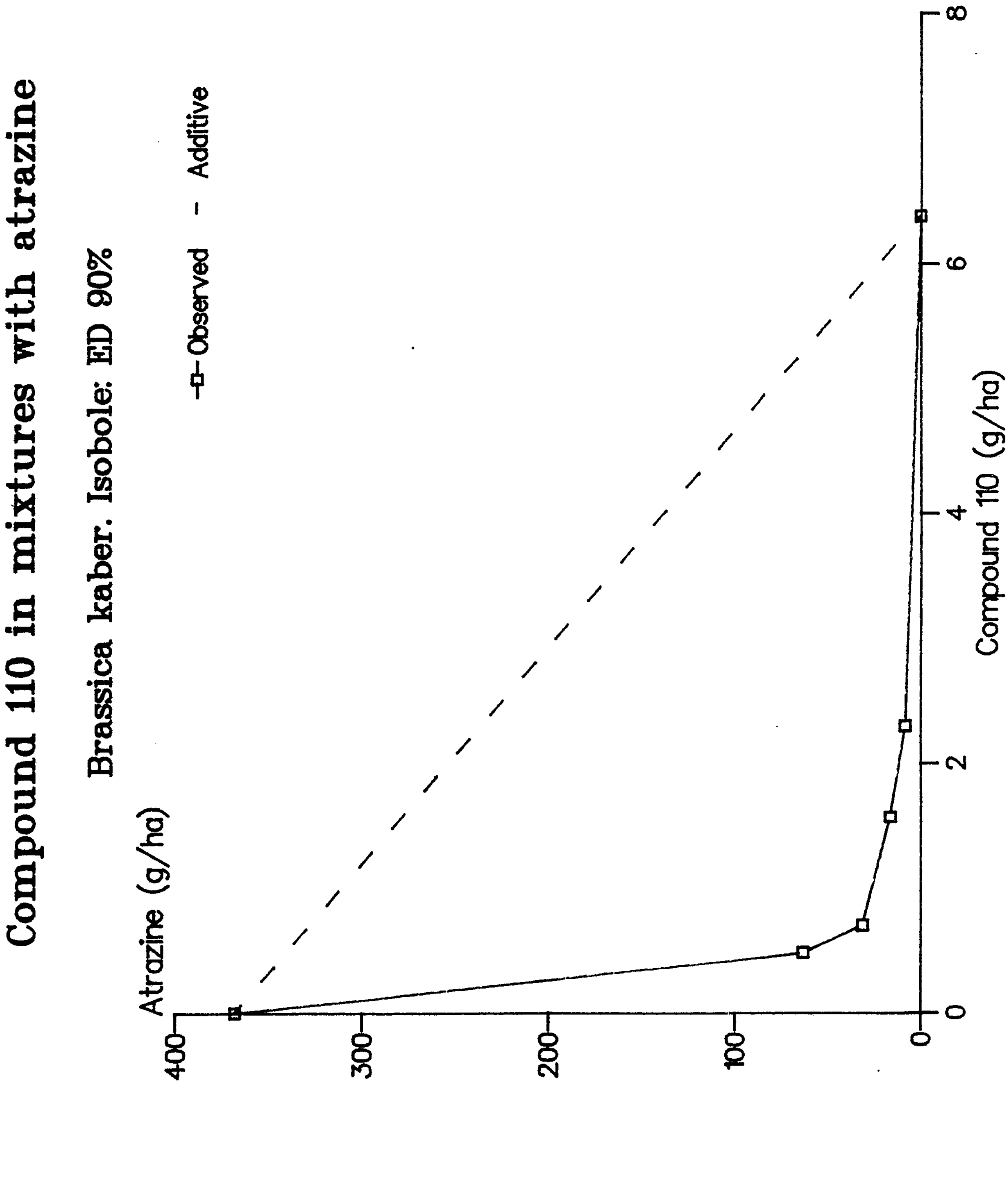
Compound 110 in mixtures with atrazine
Brassica kaber. Isobole: ED 90%
Observed
Additive
Atrazine (g/ha)
400
300
200
100
0
0
2
4
6
8
Compound 110 (g/ha)

FIGURE 14

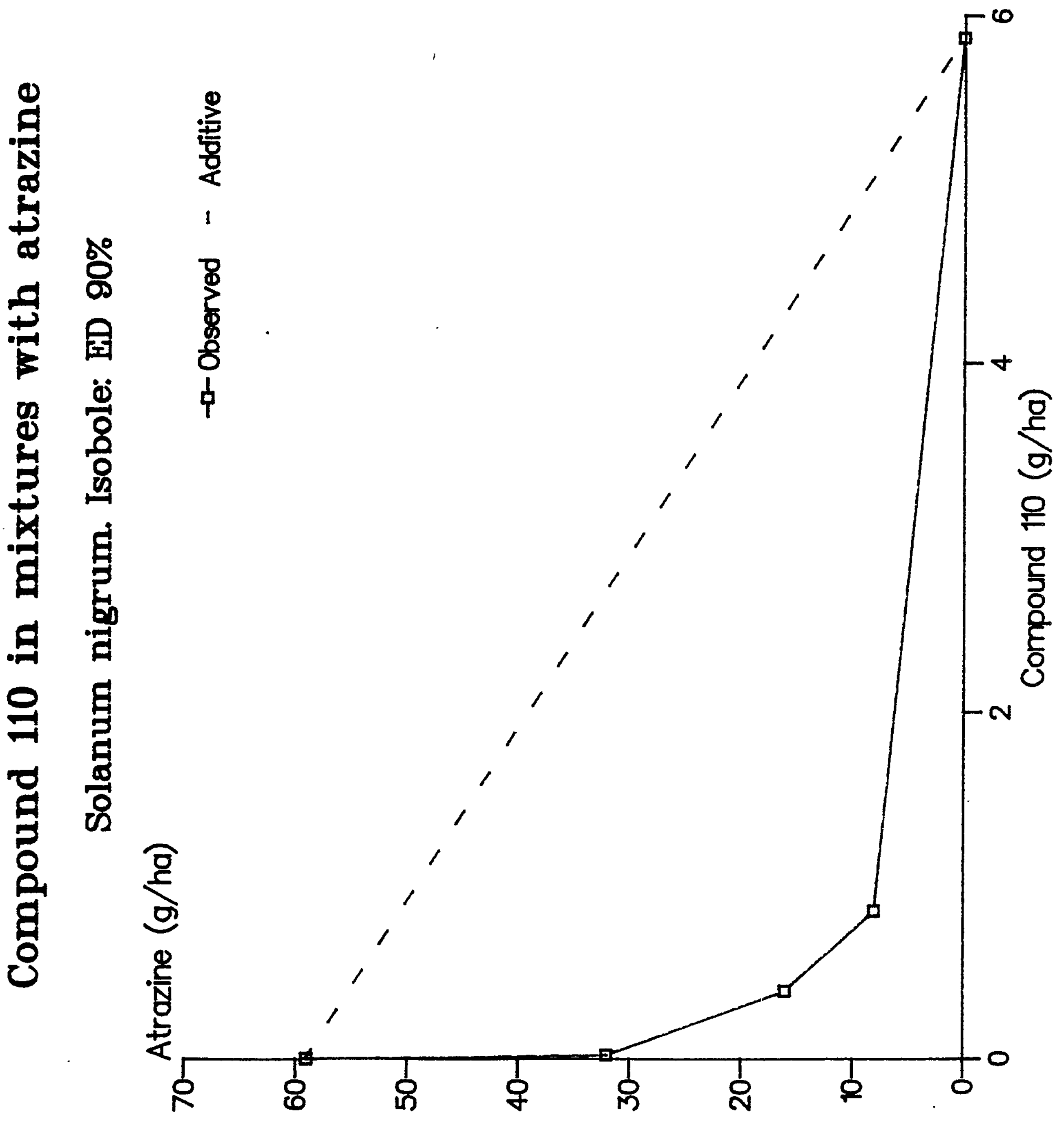

Compound 110 in mixtures with atrazine
Solanum nigrum. Isobole: ED 90%
Observed
Additive
Atrazine (g/ha)
70
60
50
40
30
20
10
0
Compound 110 (g/ha)
0
2
4
6

FIGURE 15

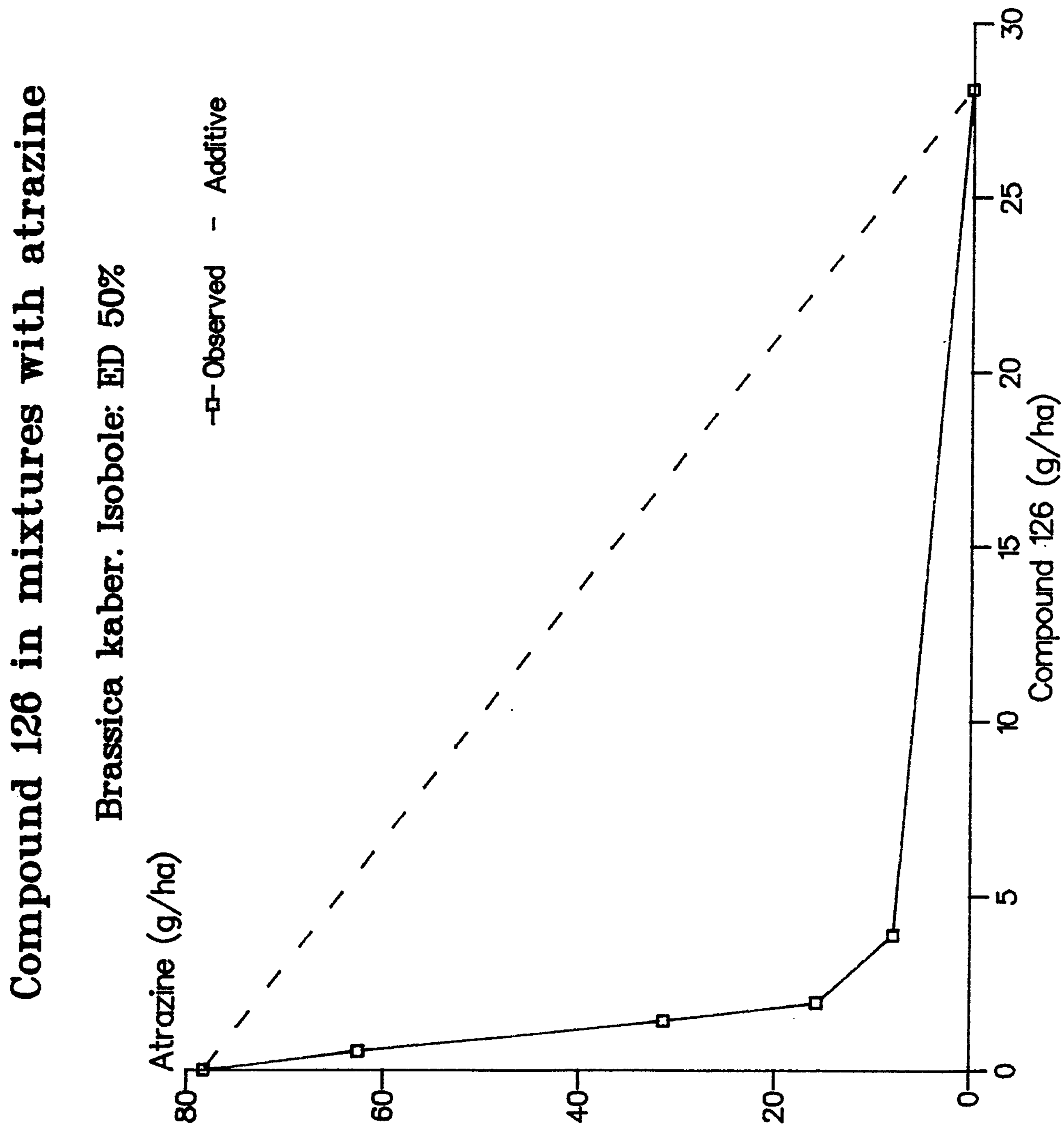
Compound 126 in mixtures with atrazine
Brassica kaber. Isobole: ED 50%
Observed
Additive
Atrazine (g/ha)
80
60
40
20
0
0
5
10
15
20
25
30
Compound 126 (g/ha)

FIGURE 16

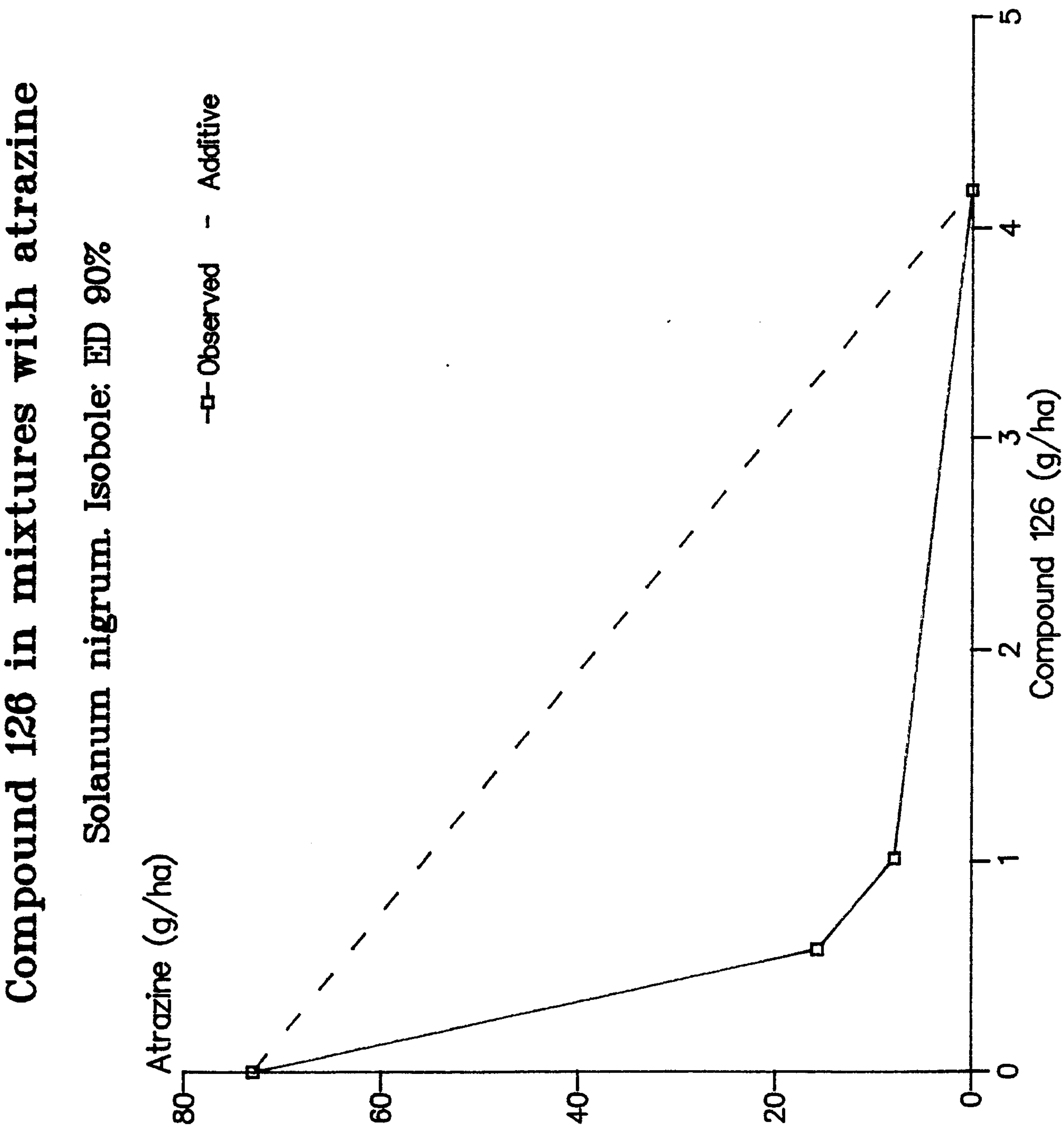
Compound 126 in mixtures with atrazine
Solanum nigrum. Isobole: ED 90%
Observed
Additive
Atrazine (g/ha)
80
60
40
20
0
0
1
2
3
4
5
Compound 126 (g/ha)

FIGURE 17

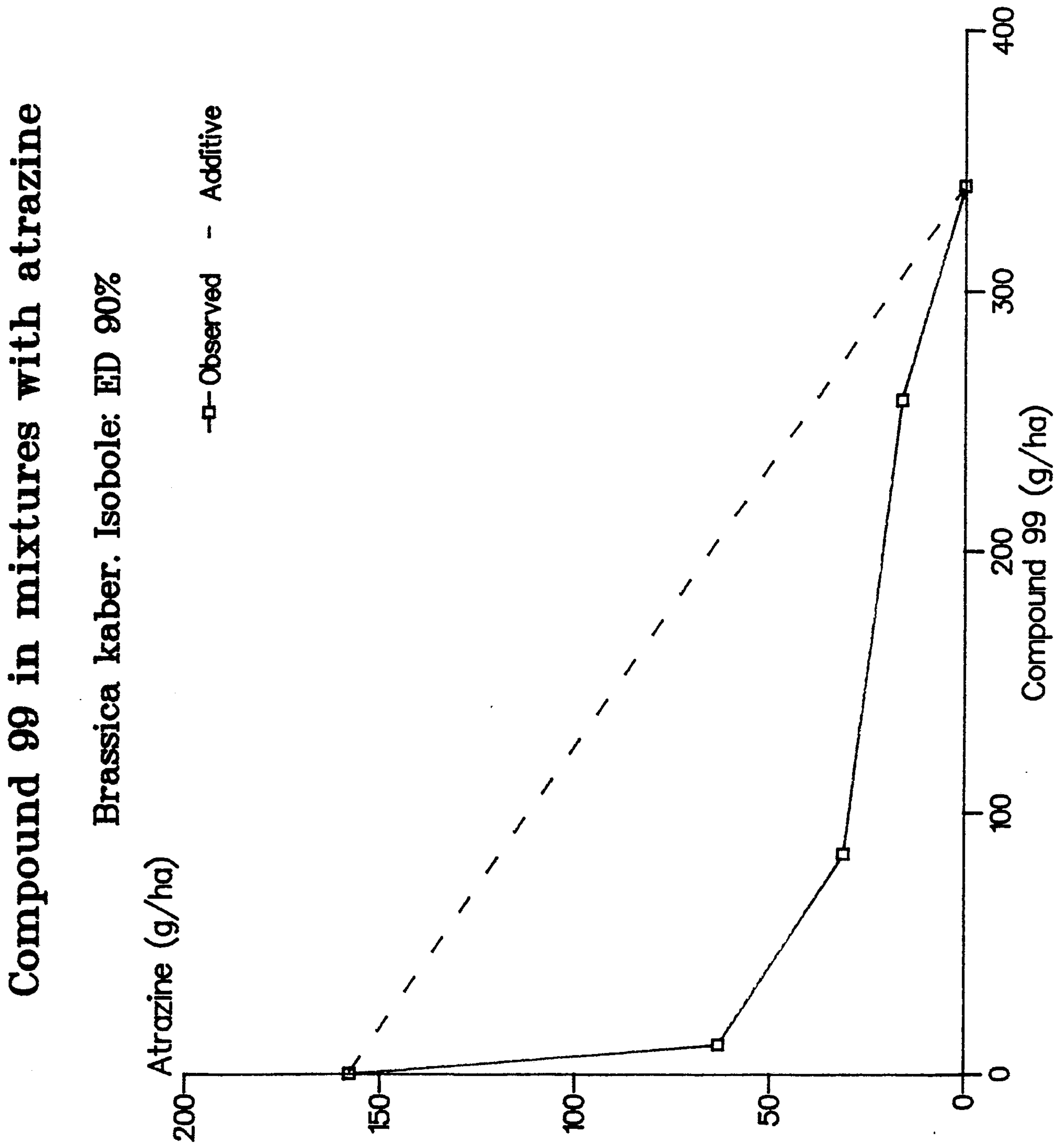
Compound 99 in mixtures with atrazine
Brassica kaber. Isobole: ED 90%
Observed
Additive
Atrazine (g/ha)
200
150
100
50
0
0
100
200
300
400
Compound 99 (g/ha)

FIGURE 18

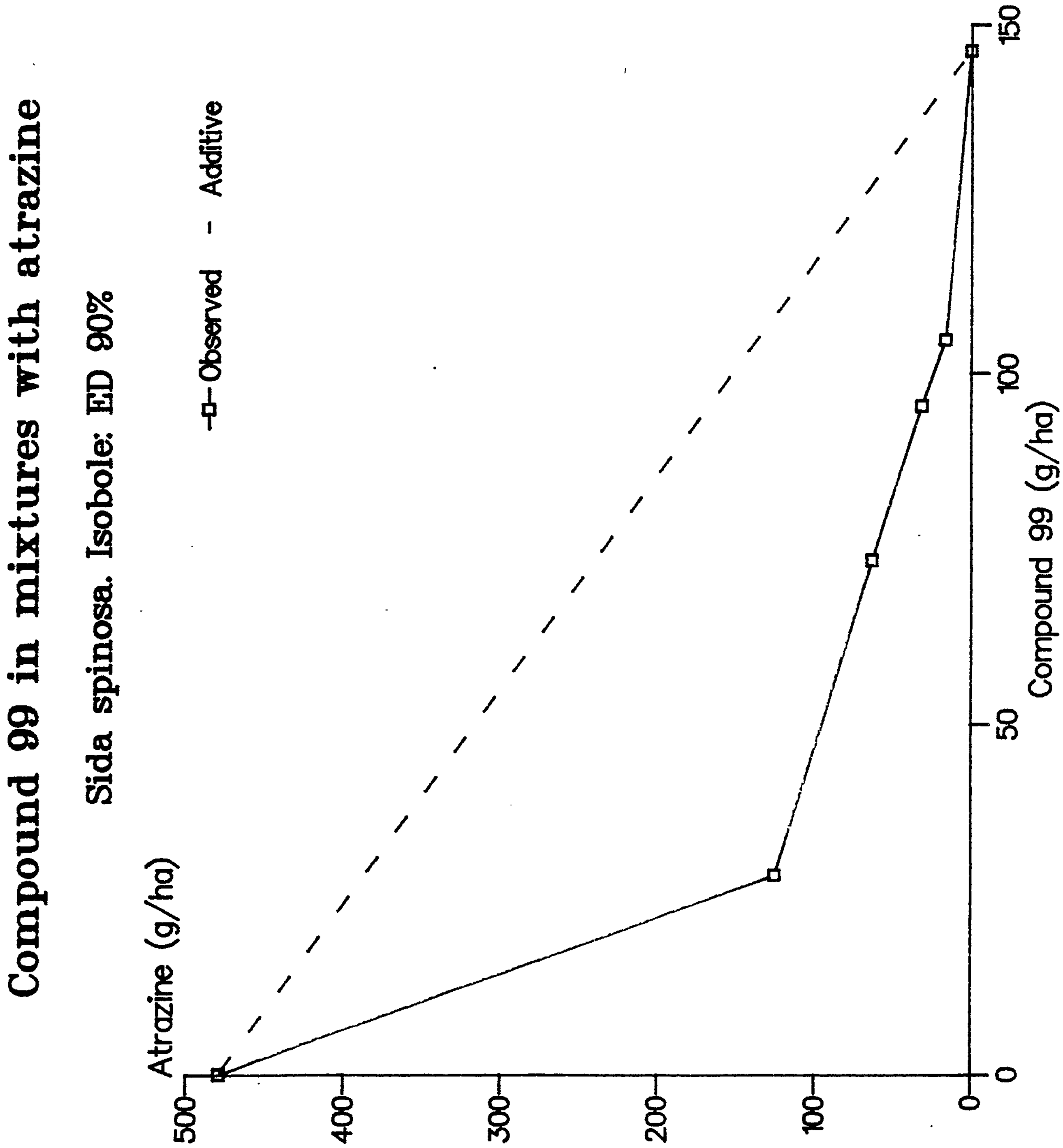
Compound 99 in mixtures with atrazine
Sida spinosa. Isobole: ED 90%
Observed
Additive
Atrazine (g/ha)
500
400
300
200
100
0
0
50
100
150
Compound 99 (g/ha)

FIGURE 19

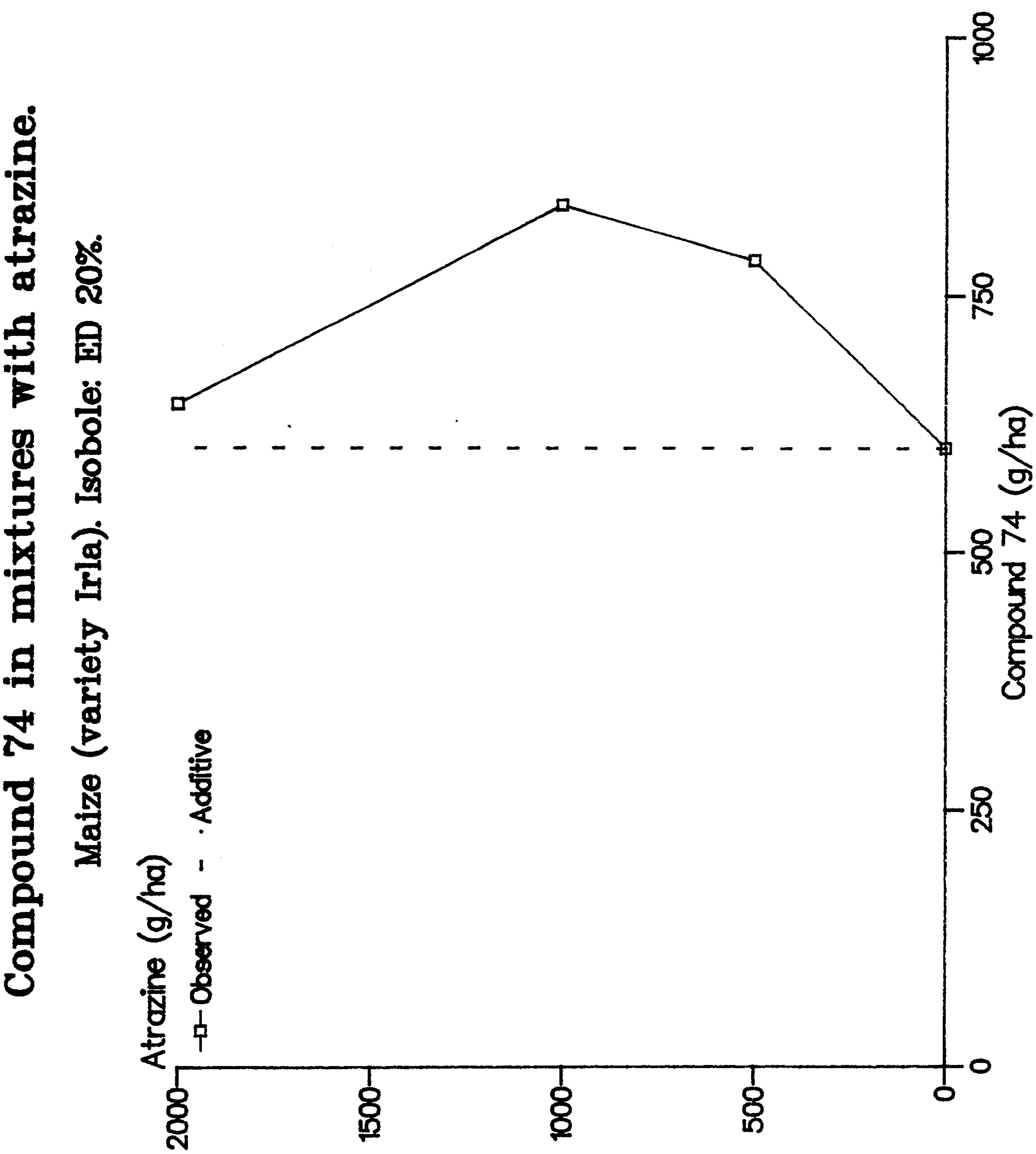
Compound 74 in mixtures with atrazine.
Maize (variety Irla). Isobole: ED 20%.
Atrazine (g/ha)
Observed
Additive
2000
1500
1000
500
0
0
250
500
750
1000
Compound 74 (g/ha)